# EUROPÄISCHE PATENTSCHRIFT

(11) **EP 2 188 684 B1**
(45) Veröffentlichungstag und Bekanntmachung des Hinweises auf die Patenterteilung: **28.03.2018**
(21) Anmeldenummer: 08803149.7
(22) Anmeldetag: 21.08.2008
(51) Int. Cl.: G05B 19/4069

(54) **VIRTUELLE WERKZEUGMASCHINE ZUR DARSTELLUNG VON AKTIONEN VON BEARBEITUNGSEINHEITEN EINER REALEN WERKZEUGMASCHINE**
VIRTUAL MACHINE TOOL FOR REPRESENTING OPERATIONS OF MACHINING UNITS OF A REAL MACHINE TOOL
MACHINE-OUTIL VIRTUELLE SERVANT À REPRÉSENTER DES ACTIONS MENÉES PAR DES UNITÉS D'USINAGE D'UNE MACHINE-OUTIL RÉELLE

(30) Priorität: 14.09.2007 DE 102007045593
(43) Veröffentlichungstag der Anmeldung: 26.05.2010
(73) Patentinhaber: Index-Werke GmbH & Co. KG Hahn & Tessky, 73730 Esslingen (DE)
(72) Erfinder: BECK, Eberhard, 73773 Aichwald (DE); EISELE, Matthias, 70329 Stuttgart (DE); GROSSMANN, Stefan, 73669 Lichtenwald (DE); JUNGINGER, Jörg, 73776 Altbach (DE)
(74) Vertreter: Hoeger, Stellrecht & Partner Patentanwälte mbB
(86) Internationale Anmeldenummer: PCT/EP2008/060984
(87) Internationale Veröffentlichungsnummer: WO 2009/037066

(56) Entgegenhaltungen:
- DE-A1-102005 045 028
- US-B1- 6 662 073
- YAO Y ET AL: "VMMC: a test-bed for machining" COMPUTERS IN INDUSTRY, ELSEVIER SCIENCE PUBLISHERS. AMSTERDAM, NL, Bd. 47, Nr. 3, 1. März 2002 (2002-03-01), Seiten 255-268, XP004343668 ISSN: 0166-3615
- YOONHO SEO ET AL: "Structure Modeling of Machine Tools and Internet-Based Implementation" WINTER SIMULATION CONFERENCE, 2005 PROCEEDINGS OF THE DEC. 4, 2005, PISCATAWAY, NJ, USA,IEEE, 4. Dezember 2005 (2005-12-04), Seiten 1699-1704, XP010880697 ISBN: 978-0-7803-9519-0
- PRITSCHOW ET AL: "Simulation, Werkzeugmaschinen, Steuerungen. Wege zur virtuellen Werkzeugmaschine. Verschiedene Betrachtungsweisen und Modellierungsansätze Ways to virtual machine tools - Different views and approaches in modelling" WERKSTATTSTECHNIK, SPRINGER VERLAG. BERLIN, DE, Bd. 92, Nr. 5, 1. Januar 2002 (2002-01-01), Seiten 194-199, XP001538243 ISSN: 0340-4544

## Beschreibung

Die Erfindung betrifft eine virtuelle Werkzeugmaschine zur Darstellung von Aktionen von Bearbeitungseinheiten einer Werkzeugmaschine, insbesondere von Aktionen bei der Bearbeitung eines Werkstücks entsprechend einem CNC-Bearbeitungsprogrammkomplex, mittels mindestens einer ersten Visualisierungseinheit in Form von Aktionen virtueller Bearbeitungseinheiten, umfassend eine Aktionssteuerung, die mindestens eine erste Datenverarbeitungseinheit aufweist, welche mit einem CNC-Sätze des Bearbeitungsprogrammkomplexes verarbeitenden Steuerungsprogramm Steuerbefehle für Aktionen der virtuellen Bearbeitungseinheiten ermittelt, eine Visualisierungssteuerung, die mindestens eine zweite Datenverarbeitungseinheit aufweist, welche mit einem Visualisierungsprogramm anhand von geometrischen Konfigurationsdaten eines gespeicherten Maschinenmodells und den von der Aktionssteuerung ermittelten Steuerbefehlen Aktionen der virtuellen Bearbeitungseinheiten auf der ersten Visualisierungseinheit darstellt, und eine Bediensteuerung mit einer dritten Datenverarbeitungseinheit, welche mit einem Bedienprogramm die Aktionssteuerung betreibt.

Derartige virtuelle Werkzeugmaschinen sind aus dem Stand der Technik, beispielsweise der DE 10 2005 045 028 A1 bekannt. Das Dokument "VMMC: a test-bed for machining", from Yao Y et Al., offenbart auch eine Simulation einer Bearbeitung eines virtuellen Werkstücks. Bei diesen besteht das Problem, dass die Simulation einer Bearbeitung eines virtuellen Werkstücks auf einer derartigen virtuellen Werkzeugmaschine von der Realität abweicht.

Der Erfindung liegt daher die Aufgabe zugrunde, eine derartige virtuelle Werkzeugmaschine derart zu verbessern, dass die Simulation der Bearbeitung eines virtuellen Werkstücks der Realität möglichst nahe kommt.

Diese Aufgabe wird bei einer virtuellen Werkzeugmaschine der eingangs beschriebenen Art erfindungsgemäß dadurch gelöst, dass die virtuelle Werkzeugmaschine ein Werkzeugmodelliersystem umfasst, mit welchem für mindestens ein Werkzeug aus Werkzeugdaten und einem Werkzeugmodell Werkzeugkonfigurationsdaten generierbar und im Visualisierungsprogramm zuführbar sind.

Der Vorteil der erfindungsgemäßen Lösung ist darin zu sehen, dass damit die Möglichkeit geschaffen wurde, in einfacher Weise Werkzeugkonfigurationsdaten zu generieren, die auf Werkzeugdaten einerseits und Geometriedaten andererseits basieren und gegenüber den bisher bekannten Lösungen einerseits einfach und andererseits möglichst realitätsnah erzeugt werden können.

Besonders günstig ist es, wenn die vom Werkzeugmodeliersystem benötigten Werkzeugdaten eine Struktur aufweisen, die einer Struktur von Werkzeugdaten des CNC-Bearbeitungsprogrammkomplexes entspricht, mit denen das Steuerungsprogramm der Aktionssteuerung einer realen Werkzeugmaschine arbeitet.

Diese Lösung hat den großen Vorteil, dass damit die ohnehin vorhandenen und dem CNC-Bearbeitungsprogrammkomplex zumindest unmittelbar vor der Bearbeitung eines realen Werkstücks vorliegenden Werkzeugdaten der realen Werkzeugmaschine übernommen werden können.

Besonders zweckmäßig ist es dabei, wenn das Bedienprogramm eine Werkzeugfunktion mit einem Werkzeugdatenübernahmemodus aufweist, mit welchem dem CNC-Bearbeitungsprogrammkomplex zugeordnete Werkzeugdaten dem Werkzeugmodelliersystem zur Generierung der Werkzeugkonfigurationsdaten übergebbar sind.

Der Vorteil dieser Lösung ist darin zu sehen, dass damit die Möglichkeit besteht, die realen Werkzeugdaten einer realen Werkzeugmaschine vor einer Bearbeitung des realen Werkstücks in die virtuelle Werkzeugmaschine zu übernehmen und in der virtuellen Werkzeugmaschine nochmals eine Bearbeitung eines virtuellen Werkstücks zu simulieren, um beispielsweise den gesamten CNC-Bearbeitungsprogrammkomplex nochmals mit den Werkzeugdaten der realen Werkzeuge auf Kollisionsgefahren hin zu überprüfen.

Um in einfacher Weise die Werkzeugdaten dem Werkzeugmodelliersystem übergeben zu können, ist vorzugsweise vorgesehen dass der Werkzeugdatenübernahmemodus die in der Bediensteuerung zusammen mit dem CNC-Bearbeitungskomplex gespeicherten Werkzeugdaten ausliest und dem Werkzeugmodelliersystem übergibt.

Das erfindungsgemäße Werkzeugmodelliersystem kann dabei in unterschiedlichster Art und Weise ausgebildet sein.

Insbesondere wurden hinsichtlich der Erzeugung der Werkzeugkonfigurationsdaten innerhalb des Werkzeugmodelliersystems im Einzelnen bislang keine näheren Angaben gemacht.

So sieht eine vorteilhafte Lösung vor, dass das Werkzeugmodelliersystem aus im Werkzeugmodell gespeicherten Geometriedaten von Einzelkomponenten der Werkzeuge und den Werkzeugdaten die Werkzeugkonfigurationsdaten generiert.

Dabei können die Geometriedaten in unterschiedlichster Art und Weise aufgebaut sein.

Eine der Realität sehr nahe kommende Lösung sieht vor, dass die Geometriedaten der Einzelkomponenten der Werkzeuge dreidimensionale Geometriedaten sind, die beispielsweise aus Konstruktionszeichnungen der Einzelkomponenten abgeleitet sind.

Eine weitere vorteilhafte Lösung sieht vor, dass das Werkzeugmodelliersystem aus im Werkzeugmodell gespeicherten Geometriedaten von angenäherten Volumenmodellen von Werkzeugen und den Werkzeugdaten die Werkzeugkonfigurationsdaten generiert.

Diese Art der Generierung der Werkzeugkonfigurationsdaten ist weniger genau und präzise, hat jedoch den Vorteil, dass hierzu keinerlei dreidimensionale Geometriedaten über die Komponenten der Werkzeuge erforderlich sind, sondern seitens der Bedienungsperson in einfacher Weise durch Definition von angenäherten Volumenmodellen die Geometriedaten der Werkzeuge erzeugbar sind.

Insbesondere sind in diesem Fall die Geometriedaten der Volumenmodelle Geometriedaten monolithischer Körper, die durch die Werkzeugdatenform variabel sind, so dass die monolithischen Körper in ihrer Form entsprechend den Werkzeugdaten angepasst werden.

Damit liegen zwar keine den realen Abmessungen entsprechende Körper den Werkzeugkonfigurationsdaten zugrunde, allerdings sind die Werkzeugkonfigurationsdaten zumindest hinsichtlich der für die Bearbeitung wichtigen Werkzeugdaten exakt bestimmt.

Darüber hinaus wird die eingangs genannte Aufgabe erfindungsgemäß durch ein Verfahren zur Darstellung von Aktionen von Bearbeitungseinheiten einer realen Werkzeugmaschine, insbesondere von Aktionen bei der Bearbeitung eines Werkstücks entsprechend einem CNC-Bearbeitungskomplex mittels mindestens einer ersten Visualisierungseinheit in Form von Aktionen virtueller Bearbeitungseinheiten einer virtuellen Werkzeugmaschine, bei welchem eine Aktionssteuerung mit einem CNC-Sätze des CNC-Bearbeitungsprogrammkomplexes verarbeitenden Steuerungsprogramm Steuerbefehle für Aktionen der virtuellen Bearbeitungseinheiten ermittelt, bei welchem eine Bedienungssteuerung mit einem Bedienprogramm die Aktionssteuerung betreibt und bei welchem eine Visualisierungssteuerung mit einem Visualisierungsprogramm anhand von Konfigurationsdaten eines gespeicherten Maschinenmodells und den von der Aktionssteuerung ermittelten Steuerbefehlen Aktionen der virtuellen Bearbeitungseinheit auf der ersten Visualisierungseinheit darstellt, erfindungsgemäß dadurch gelöst, dass ein Werkzeugmodelliersystem vorgesehen ist, welches für mindestens ein Werkzeug Werkzeugkonfigurationsdaten für das Visualisierungsprogramm aus Werkzeugdaten und Geometriedaten generiert.

Dabei ist es besonders vorteilhaft, wenn die vom Werkzeugmodelliersystem verarbeiteten Werkzeugdaten eine Struktur aufweisen, die einer Struktur der Werkzeugdaten des CNC-Bearbeitungsprogrammkomplexes für die reale Werkzeugmaschine entsprechen, so dass damit die Möglichkeit besteht, die Werkzeugdaten zwischen der realen Werkzeugmaschine und der virtuellen Werkzeugmaschine auszutauschen.

Besonders günstig ist es hierbei, wenn die virtuellen Werkzeugdaten den bei einer realen Werkzeugbestückung der realen Werkzeugmaschine ermittelten Werkzeugdaten für mindestens ein Werkzeug entsprechen.

Dabei ist das mindestens eine Werkzeug vorzugsweise das in einer Arbeitsstellung stehende Werkzeug, mit welchem am ehesten Kollisionen zu befürchten sind.

Hinsichtlich der Ermittlung der Werkzeugdaten bei der realen Werkzeugbestückung wurden bislang keine näheren Angaben gemacht.

So sieht eine vorteilhafte Lösung vor, dass die Werkzeugdaten der realen Werkzeugbestückung bei einer realen Werkzeugvoreinstellung ermittelt werden.

Ferner ist bei Werkzeugdaten stets zu berücksichtigen, dass sich die Abmessungen der Werkzeuge, beispielsweise durch Verschleiß ändern.

Aus diesem Grund ist vorzugsweise vorgesehen, dass die Werkzeugdaten entsprechend einem Verschleiß der Werkzeuge korrigiert werden.

Weitere Merkmale des erfindungsgemäßen Verfahrens wurden bereits im Zusammenhang mit der erfindungsgemäßen virtuellen Werkzeugmaschine erläutert, so dass auf diese Ausführungen hierzu vollinhaltlich Bezug genommen werden kann.

Im Übrigen sind weitere Merkmale und Vorteile der Erfindung Gegenstand der nachfolgenden Beschreibung sowie der zeichnerischen Darstellung einiger Ausführungsbeispiele.

In der Zeichnung zeigen:
- Fig. 1: eine schematische Darstellung einer Konfiguration eines Ausführungsbeispiels einer erfindungsgemäßen realen Werkzeugmaschine;
- Fig. 2: eine schematische Darstellung einer Programmkonfiguration des Ausführungsbeispiels der erfindungsgemäßen realen Werkzeugmaschine;
- Fig. 3: eine schematische Darstellung einer Zuordnung von Konfigurationsparametern zur Programmkonfiguration des Ausführungsbeispiels der erfindungsgemäßen realen Werkzeugmaschine gemäß Fig. 2;
- Fig. 4: eine schematische Darstellung einer Konfiguration eines Ausführungsbeispiels einer erfindungsgemäßen virtuellen Werkzeugmaschine;
- Fig. 5: eine schematische Darstellung einer Programmkonfiguration des Ausführungsbeispiels der erfindungsgemäßen virtuellen Werkzeugmaschine;
- Fig. 6: eine schematische Darstellung einer Zuordnung von Konfigurationsparametern zur Programmkonfiguration des Ausführungsbeispiels der erfindungsgemäßen virtuellen Werkzeugmaschine gemäß Fig. 2;
- Fig. 7: eine schematische Darstellung eines ersten Ausführungsbeispiels eines erfindungsgemäßen Werkzeugmodelliersystems innerhalb der Programmkonfiguration der erfindungsgemäßen virtuellen Werkzeugmaschine;
- Fig. 8: eine schematische Darstellung eines Aufbaus eines virtuellen Werkzeugs in der erfindungsgemäßen virtuellen Werkzeugmaschine;
- Fig. 9: eine schematische Darstellung einer Erstellung des virtuellen Werkzeugs gemäß Fig. 8;

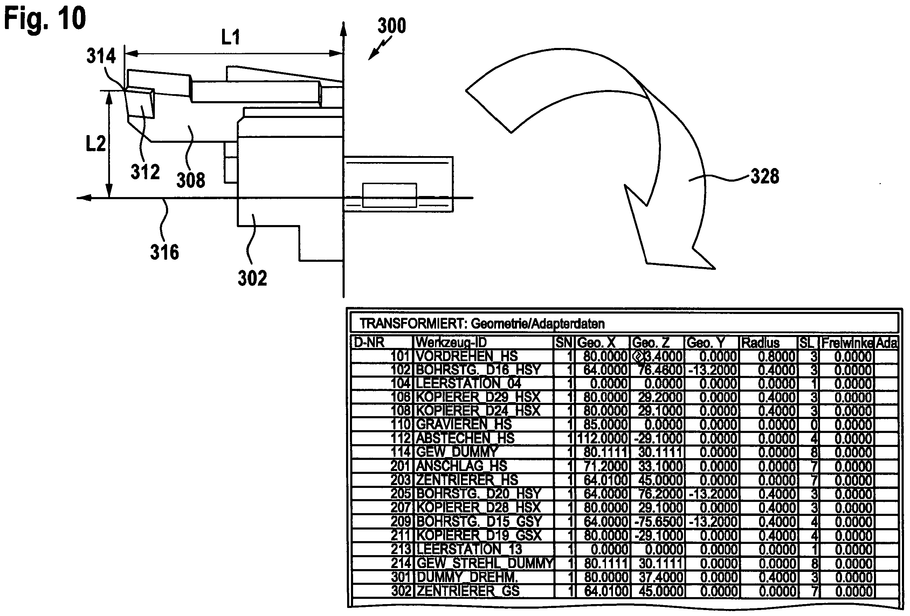

- Fig. 10: eine schematische Darstellung einer Generierung von Werkzeugdaten beim ersten Ausführungsbeispiel des erfindungsgemäßen Werkzeugmodelliersystems;

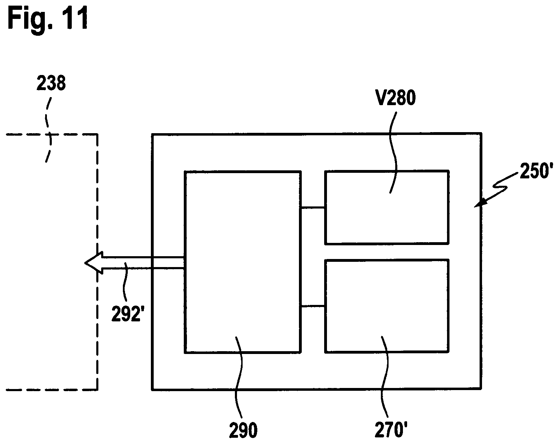

- Fig. 11: eine schematische Darstellung ähnlich Fig. 7 eines zweiten Ausführungsbeispiels eines erfindungsgemäßen Werkzeugmodelliersystems innerhalb der Programmkonfiguration der virtuellen Werkzeugmaschine und
- Fig. 12: eine schematische Darstellung ähnlich Fig. 9 einer Generierung eines virtuellen Werkzeugs gemäß dem zweiten Ausführungsbeispiel des erfindungsgemäßen Werkzeugmodelliersystems.

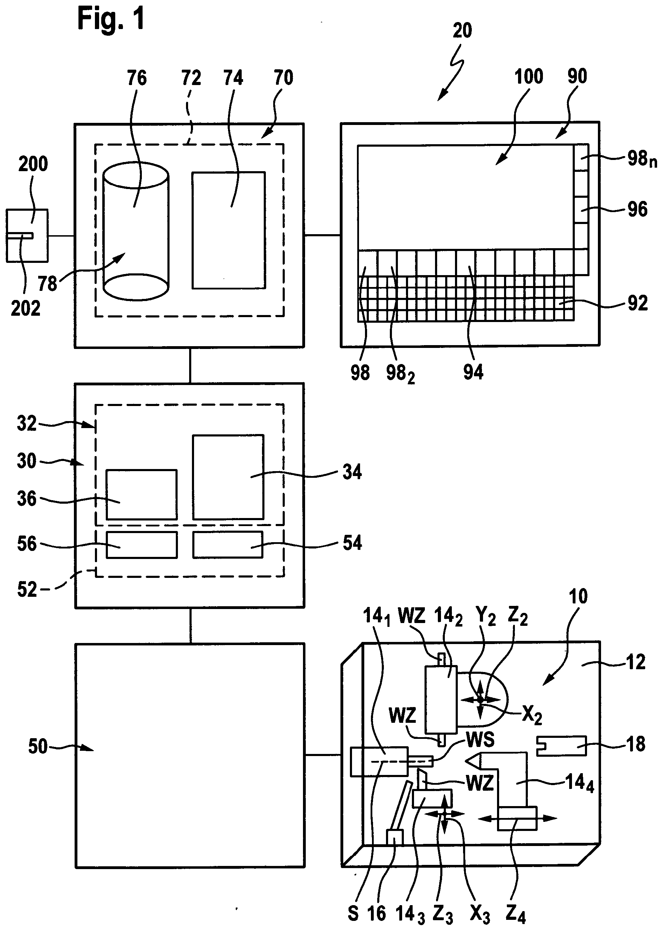

Eine in Fig. 1 bis 3 dargestellte reale Werkzeugmaschine, als Ganzes mit 10 bezeichnet, umfasst ein Maschinenbett 12, auf welchem eine Vielzahl von Bearbeitungseinheiten 14₁, 14₂, 14₃ und 14₄ angeordnet ist, die dazu dienen, ein Werkstück WS zu bearbeiten.

Beispielsweise ist die Bearbeitungseinheit 14₁ eine Werkstückspindel, die Bearbeitungseinheit 14₂ ein Werkzeugträger, die Bearbeitungseinheit 14₃ ein weiterer Werkzeugträger und die Bearbeitungseinheit 14₄ ein Reitstock zur Abstützung des Werkstücks WS.

Die Werkstückspindel 14₁ nimmt dabei das Werkstück WS auf und ist in der Lage, das Werkstück WS um eine Spindelachse S rotierend anzutreiben.

Der Werkzeugträger 14₂ ist beispielsweise als Mehrfachwerkzeugträger ausgebildet und trägt eine Vielzahl von Werkzeugen WZ, von denen jeweils eines an dem Werkstück WS einsetzbar ist.

Der Werkzeugträger 14₂ ist dabei beispielsweise relativ zum Maschinenbett 12 und auch relativ zur Werkstückspindel 14₁ durch drei orthogonal zueinander verlaufende NC-Achsen, beispielsweise eine X-Achse X₂, eine Y-Achse Y₂ und eine Z-Achse Z₂ mit entsprechenden Antrieben, das heißt einem X-Achsenantrieb, einem Y-Achsenantrieb und einem Z-Achsenantrieb bewegbar, um mit dem in Arbeitsstellung befindlichen Werkzeug WZ das Werkstück WS zu bearbeiten.

Auch der Werkzeugträger 14₃ trägt ein Werkzeug WZ und ist beispielsweise entlang einer X-Achse und entlang einer Z-Achse mit entsprechenden Achsantrieben, das heißt einem X-Achsenantrieb und einem Z-Achsenantrieb, relativ zur Werkstückspindel 14₁ bewegbar.

In gleicher Weise ist der Reitstock 14₄ relativ zum Maschinenbett 12 längs einer Z-Achse mit einem Z-Achsantrieb bewegbar, um den Reitstock 14₄ zur Abstützung des Werkstücks WS in Richtung desselben zu verfahren.

Ferner ist die Werkzeugmaschine 10 beispielsweise mit einer Kühlmittelzufuhr 16 und einer Werkstückhandhabung 18 versehen.

Zur Bearbeitung des Werkstücks durch Bewegen der NC-Achsen X₂, Y₂, Z₂, X₃, Z₃, Z₄ ist die Werkzeugmaschine 10 mit einer als Ganzes mit 20 bezeichneten Maschinensteuerung vorgesehen, welche eine Aktionssteuerung 30 mit einer ersten Datenverarbeitungseinheit 32 aufweist, die ihrerseits durch einen Prozessor 34 und einen Speicher 36 gebildet ist, wobei der Speicher 36 als Speicher mit schnellem Zugriff ausgebildet ist, das heißt beispielsweise als RAM-Speicher.

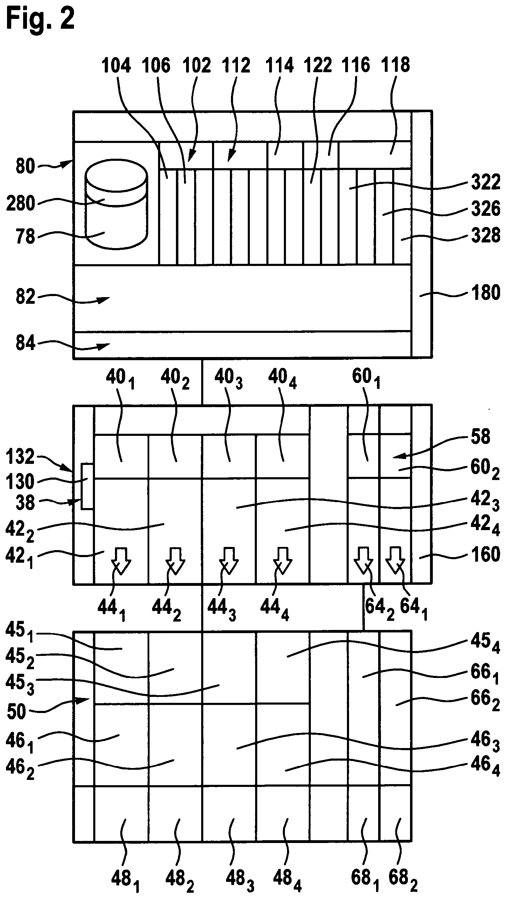

Auf der Datenverarbeitungseinheit 32 läuft, wie in Fig. 2 dargestellt, ein als Ganzes mit 38 bezeichnetes Kernsteuerungsprogramm, welches in der Lage ist, CNC-Sätze von einem oder mehreren Teileprogrammen 40, beispielsweise von den Teileprogrammen 40₁ bis 40₄, abzuarbeiten, wobei die Teileprogramme 40₁ bis 40₄ einzelnen Kanälen 42₁ bis 42₄ des Kernsteuerungsprogramms 38 zugeordnet sind, welche die parallele Abarbeitung der einzelnen Teileprogramme 40₁ bis 40₄ erlauben, die entweder unabhängig voneinander erfolgt oder durch Synchronisierbefehle synchronisiert werden kann.

In jedem der Kanäle 42₁ bis 42₄ werden Steuerbefehle 44₁ bis 44₄ ermittelt, die dazu dienen, Aktionen der Bearbeitungseinheiten 14 zu veranlassen und zu steuern.

Beispielsweise ist jeweils einer der Kanäle 42 einer Funktionsweise einer oder mehrerer Bearbeitungseinheiten 14, beispielsweise den Bewegungsachsen X₂, Y₂, Z₂ der Bearbeitungseinheit 14₂, und einer Drehzahl oder einer Drehposition der Bearbeitungseinheit 14₁, um die Spindelachse S, zugeordnet.

Zur Steuerung der in Fig. 1 dargestellten Achsantriebe 48 sind für jeden der Kanäle 42 Antriebsverstärker 45₁ bis 45₄ und Regelkreise 46₁, 46₂, 46₃ und 46₄ vorgesehen, die die jeweiligen Achsantriebe 48, beispielsweise die Achsantriebe 48₁, 48₂, 48₃ und 48₄, geregelt betreiben, wobei die Antriebsverstärker 45, die Regelkreise 46 und die Achsantriebe 48 ein Antriebssystem 50 der Werkzeugmaschine 10 bilden.

Dabei können die Regelkreise 46 beispielsweise Lageregelkreise und/oder Geschwindigkeitsregelkreise sein.

Um Zusatzfunktionen der Werkzeugmaschine 10 steuern zu können, ist in der Aktionssteuerung 30 noch eine speicherprogrammierbare Steuerung 52 zusätzlich zur ersten Datenverarbeitungseinheit 32 vorgesehen, die ihrerseits einen Prozessor 54 sowie einen Speicher 56, als Speicher mit schnellem Zugriff, aufweisen kann.

Mit der speicherprogrammierbaren Steuerung 52 sind dabei Zusatzfunktionen, wie beispielsweise die Kühlmittelzufuhr 16 oder die Werkstückhandhabung 18 steuerbar.

Hierzu ist, wie in Fig. 2 dargestellt, ein Zusatzfunktionssteuerprogramm 58 vorgesehen, welches einzelne Teilfunktionen 60₁ und 60₂ aufweist, die ebenfalls dazu dienen, Zusatzfunktionssteuerbefehle 64₁ und 64₂ zu erzeugen, die entsprechenden Aktorversorgungen 66₁ und 66₂ übermittelt werden, um entsprechende Aktoren 68₁ und 68₂ anzusteuern.

Die Aktionssteuerung 30 ist durch eine als Ganzes mit 70 bezeichnete Bediensteuerung steuerbar, welche eine Datenverarbeitungseinheit 72 aufweist, die ihrerseits beispielsweise einen Prozessor 74 und einen Speicher 76 für einen oder mehrere CNC-Bearbeitungsprogrammkomplexe 78 umfasst.

In dem Speicher 76 ist daher der gesamte für die Bearbeitung des Werkstücks WS vorgesehene CNC-Bearbeitungsprogrammkomplex 78 gespeichert.

Ferner läuft auf der Datenverarbeitungseinheit 72 ein als Ganzes mit 80 bezeichnetes und in Fig. 2 schematisch dargestelltes Bedienprogramm, welches eine Bedienoberfläche 82 aufweist, die mit einer als Ganzes mit 90 bezeichneten Maschinensteuereinheit, auch bezeichnet als Maschinensteuertafel, zusammenwirkt, die beispielsweise ein übliches Tastenfeld 92 sowie Reihen 94 und 96 von Funktionstasten 98₁ bis 98ₙ umfasst.

Sowohl über das Tastenfeld 92 als auch über die Funktionstasten 98 besteht die Möglichkeit, über die Bedienoberfläche 82 einzelne Funktionsabläufe oder Modi des Bedienprogramms 80 aufzurufen und/oder zu aktivieren.

Ferner ist der Maschinensteuereinheit 90 vorzugsweise noch ein Anzeigefeld 100 zugeordnet, welches die Anzeige von von dem Bedienprogramm 80 ermittelten Informationen ermöglicht. Beispielsweise ist dabei das Anzeigefeld 100 von der Bedienoberfläche 82 ansteuerbar.

Das Bedienprogramm 80 kommuniziert mit dem Kernsteuerungsprogramm 38 über ein Anpassprogramm 84.

Das Bedienprogramm 80 umfasst ferner beispielsweise eine in Fig. 2 als Ganzes mit 102 bezeichnete Programmverwaltungsfunktion, welche in der Lage ist, den im Speicher 76 gespeicherten CNC-Bearbeitungsprogrammkomplex 78 werkstückbezogen zu verwalten, das heißt, dass die Programmverwaltungsfunktion 102 die einzelnen Teileprogramme 40 des CNC-Bearbeitungsprogrammkomplexes 78 derart verwaltet, dass sie zu dem jeweiligen Werkstück WS gehörende Teileprogramme 40 entsprechend ihrer funktionalen Zusammengehörigkeit verarbeitet.

So sieht beispielsweise ein Transfermodus 104 der Programmverwaltungsfunktion 102 vor, dass die zu demselben Werkstück WS gehörenden Teileprogramme 40 zur Bearbeitung dieses Werkstücks WS in ihrem funktionalen Zusammenhang von der Bediensteuerung 70 zur Aktionssteuerung 30 transferiert werden und dabei werkstückbezogen dem Kernsteuerungsprogramm 38 übergeben werden, also beispielsweise den einzelnen Kanälen 42 des Kernsteuerungsprogramms 38 funktionsrichtig zugeordnet und entsprechend aktiviert werden.

In der Programmverwaltungsfunktion 102 gibt es noch weitere Modi, wie beispielsweise einen Start-Stoppmodus 106.

Weitere Funktionen des Bedienprogramms 80 sind eine Programmbearbeitungsfunktion 112 und/oder eine Analysefunktion 114 sowie eine Konfigurationsfunktion 116 und eine Werkzeugfunktion 118.

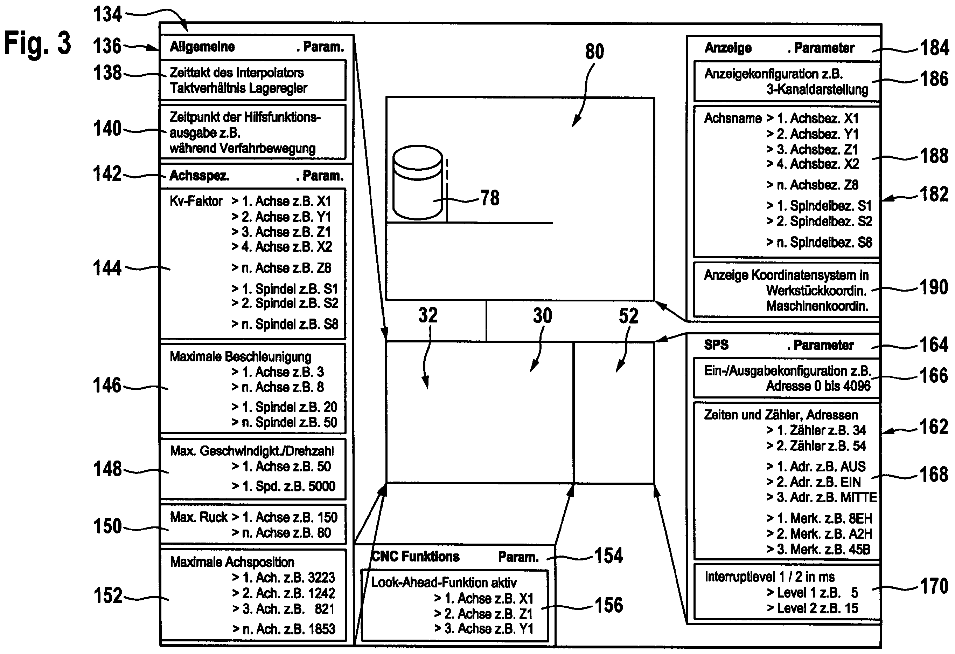

Um die Werkzeugmaschine 10 steuern zu können, ist ein Parameterfeld 130 in einer Programmumgebung 132 des Kernsteuerungsprogramms 38 vorgesehen, welches, wie in Fig. 3 dargestellt, Kernsteuerungsparameter 134 umfasst, die in Fig. 3 beispielhaft dargestellt sind.

Derartige Kernsteuerungsparameter 134 lassen sich unterteilen in allgemeine Parameter 136, wie beispielsweise Zeittaktparameter, welche beispielsweise der Zeittakt des Interpolators und/oder das Taktverhältnis des Lagereglers sind. Zu den allgemeinen Parametern 136 können aber auch Zeitpunktparameter 140 gehören, welche beispielsweise einen Zeitpunkt der Hilfsfunktionsausgabe definieren.

Neben den allgemeinen Parametern 136 gehören zu den Kernsteuerungsparametern 134 auch achsspezifische Parameter 142, die beispielsweise Verstärkungsparameter 144 umfassen, dies sind Parameter, die die Kreisverstärkung der einzelnen Regelkreise 46 festlegen.

Ferner gehören zu den achsspezifischen Parametern 142 Beschleunigungsparameter 146, welche beispielsweise die maximale Beschleunigung der NC-Achsen durch die Antriebsverstärker 45 festlegen.

Ferner umfassen die achsspezifischen Parametern 142 Geschwindigkeitsparameter 148, welche beispielsweise maximale Verfahrgeschwindigkeiten oder maximale Drehzahlen der jeweiligen Achse festlegen.

Beispielsweise umfassen die achsspezifischen Parameter 142 noch Ruckparameter 150, welche beispielsweise den maximalen Ruck einer jeweiligen NC-Achse festlegen.

Außerdem umfassen die achsspezifischen Parameter 142 auch noch Achspositionsparameter 152, welche die jeweiligen maximalen Achspositionen festlegen.

Das Parameterfeld 130 umfasst außerdem noch zusätzlich zu den Kernsteuerungsparametern 134 CNC-Funktionsparameter 154, welche beispielsweise Look-Ahead-Parameter 156 für die einzelnen NC-Achsen aufweisen.

Als Look-Ahead-Funktion wird eine vorausschauende Betrachtung der Werkzeugbahn bezeichnet, die an Ecken und Kanten rechtzeitig und automatisch den Vorschub auf ein für die maximal zulässige Bahnabweichung zulässiges Maß reduziert, wobei diese Funktion durch mindestens einen vorzugsweise mehrere Look-Ahead-Parameter 156, wie beispielsweise die Vorschubgeschwindigkeit und/oder maximale Bahnabweichung, festlegbar ist.

Darüber hinaus ist dem Zusatzfunktionssteuerprogramm 58 ebenfalls ein Parameterfeld 160 zugeordnet, in welchem als Ganzes mit 162 bezeichnete Zusatzfunktionsparameter vorhanden sind, mit welchen das Zusatzfunktionssteuerprogramm 58 arbeitet.

Die Zusatzfunktionsparameter 162 umfassen beispielsweise SPS-Parameter 164, welche ihrerseits zum Beispiel Adressparameter 166 für eine Ein-/Ausgabe von Informationen aufweisen und/oder numerische Funktionsparameter 168 oder Interruptparameter 170.

Mit diesen Zusatzfunktionsparametern 162 lässt sich somit das Zusatzfunktionssteuerprogramm 58 an die jeweilige Werkzeugmaschine anpassen.

Schließlich umfasst das Bedienprogramm 80 noch ein Parameterfeld 180, welches Bedienparameter 182 aufweist, die zur Anpassung des Bedienprogramms 80 an die jeweilige spezifische Werkzeugmaschine dienen.

Derartige Bedienparameter 182 umfassen beispielsweise Anzeigeparameter 184, die ihrerseits beispielsweise Kanaldarstellungsparameter 186, Achsnamenparameter 188 und Koordinatensystemparameter 190 aufweisen.

Sowohl die Kernsteuerungsparameter 134 als auch die Zusatzfunktionsparameter 162 und die Bedienparameter 182 umfassen typspezifische, das heißt für den jeweiligen Maschinentyp vorgesehene Parameter, als auch individuelle Parameter, das heißt auf die einzelne individuelle Werkzeugmaschine, beispielsweise identifiziert durch ihre Seriennummer, bezogene individuelle Parameter, die die Steuerungsfunktionen an die einzelne spezifisch ausgestattete Werkzeugmaschine 10 anpassen.

Beispielsweise sind die allgemeinen Parameter 136 in der Regel typspezifische Konfigurationsparameter, während die achsspezifischen Parameter 142 als auch die CNC-Funktionsparameter 154 individuelle Konfigurationsparameter sind.

Die Individualität bei den achsspezifischen Parametern 142 kommt daher, dass bei einer bestimmten Maschinentype für einen anwenderspezifischen Einsatzzweck zum Beispiel eine von der Standardausrüstung der Maschinentype abweichende Kugelrollspindel eingebaut wurde, um höhere Vorschubkräfte zu erreichen, wobei in diesem Fall dann die Beschleunigungsparameter 146 zumindest für diese NC-Achse angepasst, z.B. niedriger gewählt, werden.

Die Individualität bei den achsspezifischen Parametern 142 kann aber auch durch von der Standardausrüstung eines Maschinentyps abweichende Bearbeitungseinheiten 14 bedingt sein, die eine Anpassung der Verstärkungsparameter 144 und/oder der Geschwindigkeitsparameter 148 erfordern.

Auch die CNC Funktionsparameter 154 können von Standardwerten eines Maschinentyps abweichend gewählt sein, je nach dem wie genau ein anwenderspezifischer Fertigungsprozess ist, so dass entsprechend der durchzuführenden Rechenoperationen die Look-Ahead-Parameter 156 angepasst sind.

Ferner umfassen auch die Zusatzfunktionsparameter 162 beispielsweise in Form der Adressparameter 166 und der Interruptparameter 170 typspezifische Konfigurationsparameter, während beispielsweise die numerischen Funktionsparameter 168 individuelle Konfigurationsparameter darstellen.

Auch Zusatzfunktionen sind oft abweichend von einer Standardausstattung eines Maschinentyps ausgebildet. Beispielsweise ist die Werkstückhandhabung vielfach individuell auf das zu bearbeitende Werkstück WS abgestimmt, wodurch individuelle zum Beispiel abgestimmte Funktionsparameter 168 notwendig sind.

Schließlich umfassen auch die Bedienparameter 182 einerseits typspezifische Konfigurationsparameter, nämlich beispielsweise die Kanaldarstellungsparameter 186 und die Koordinatensystemparameter 190, während die Achsbenennungsparameter 188 individuelle Konfigurationsparameter darstellen.

Um auch bei der Bedienung einem individuellen Aufbau der Werkzeugmaschine 10 Rechnung tragen zu können, sind auch beispielsweise die Achsenbenennungen individuell angepasst, so dass in diesen Fällen auch die Achsbenennungsparameter 188 von einer Standardbenennung eines Maschinentyps abweichen.

Um bei der erfindungsgemäßen Lösung die Konfigurationsparameter einer spezifischen individuellen Werkzeugmaschine 10 archivieren und gegebenenfalls weiterverwenden zu können, ist der Bediensteuerung 70, wie in Fig. 1 dargestellt, eine externe Datenspeichereinrichtung 200 mit einem transportablen Datenträger 202 zugeordnet, in welcher durch einen Konfigurationsparameterübergabemodus 122 der Konfigurationsfunktion 116 des Bedienprogramms 80 ein Abspeichern sämtlicher Konfigurationsparameter 134, 154, 162 und 182 möglich ist.

Damit besteht die Möglichkeit, die Konfigurationsparameter jeder einzelnen spezifischen Werkzeugmaschine 10 individuell, beispielsweise auf der Basis der Maschinennummer, und beispielsweise auf einem transportablen Datenträger 202 gespeichert zu halten oder per Datentransfer einem Rechner zu übergeben.

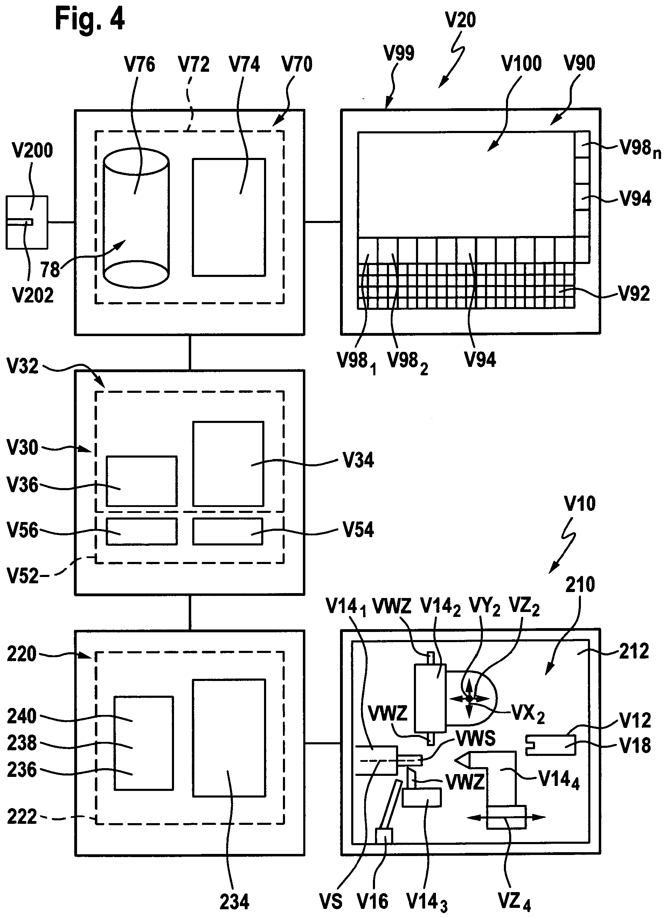

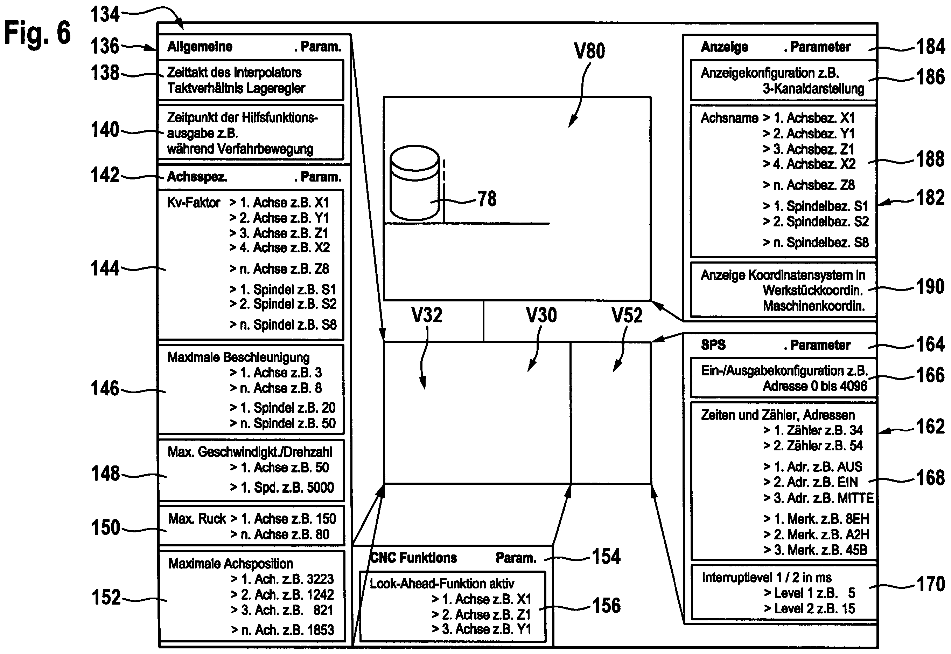

Eine in Fig. 4 bis 6 dargestellte virtuelle Werkzeugmaschine, als Ganzes mit V10 bezeichnet, umfasst eine als Ganzes mit V20 bezeichnete Maschinensteuerung, welche eine Aktionssteuerung V30 aufweist, die eine erste Datenverarbeitungseinheit V32 mit einem Prozessor V34 und einem Speicher V36 umfasst, wobei der Speicher V36 als Speicher mit schnellem Zugriff ausgebildet ist.

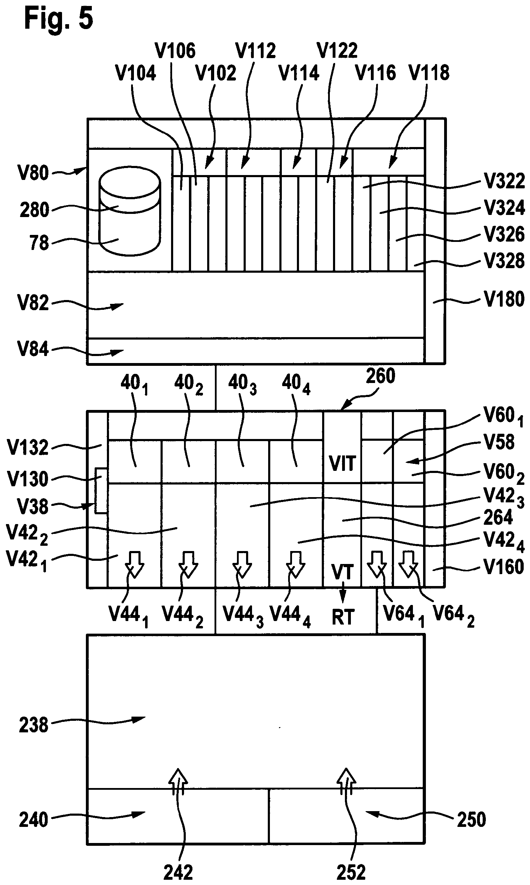

Auf der Datenverarbeitungseinheit V32 läuft, wie in Fig. 5 dargestellt, ein als Ganzes mit V38 bezeichnetes Kernsteuerungsprogramm, welches im einfachsten Fall identisch ausgebildet ist, wie das Kernsteuerungsprogramm 38 der realen Werkzeugmaschine 10, auf jeden Fall jedoch in der Lage ist, die CNC-Sätze von einem oder mehreren Teileprogrammen 40, beispielsweise ebenfalls von den Teileprogrammen 40₁ bis 40₄, in derselben Art und Weise wie das Kernsteuerungsprogramm 38 abzuarbeiten, wobei das Abarbeiten der Teileprogramme 40₁ bis 40₄ in gleicher Weise wie beim Kernsteuerungsprogramm 38 in einzelnen Kanälen V42₁ bis V42₄ des Kernsteuerungsprogramms V38 erfolgt, so dass eine parallele Abarbeitung der einzelnen Teileprogramme 40₁ bis 40₄ möglich ist, die entweder unabhängig voneinander oder synchronisiert durch Synchronisierbefehle erfolgt.

In jedem der Kanäle V42₁ bis V42₄ werden Steuerbefehle V44₁ bis V44₄ ermittelt, die vom Grundsatz her den Steuerbefehlen der realen Werkzeugmaschine 10 entsprechen, jedoch gegebenenfalls auf einer anderen Zeitskala ablaufen.

Die Steuerbefehle V44₁ bis V44₄ dienen dazu, virtuelle Bearbeitungseinheiten V14₁ bis V14₄ zu Aktionen zu veranlassen, wobei die virtuellen Bearbeitungseinheiten V14₁ bis V14₄ von einer Visualisierungseinheit 210, beispielsweise auf einem Bildschirm 212 der Visualisierungseinheit 210, dargestellt werden.

Die Darstellung der virtuellen Bearbeitungseinheiten V14 relativ zu einem virtuellen Maschinenbett V12 durch die Visualisierungseinheit 210 erfolgt mittels einer Visualisierungssteuerung 220, welche eine weitere Datenverarbeitungseinheit 222 aufweist, die beispielsweise ihrerseits einen Prozessor 234 und einen Speicher 236 aufweist, in welchem ein Visualisierungsprogramm 238 sowie ein Maschinenmodell 240 und ein Werkzeugmodelliersystem 250 vorhanden sind.

Wie in Fig. 5 dargestellt, ist das Visualisierungsprogramm 238 so ausgebildet, dass mittels entsprechend den Geometriedaten des Maschinenmodells 240, vorzugsweise den dreidimensionalen Geometriedaten des Maschinenmodells 240, generierter Maschinenkonfigurationsdaten 242 auf der Visualisierungseinheit 210 die einzelnen Bearbeitungseinheiten V14 der realen Werkzeugmaschine dargestellt werden, und zwar möglichst identisch mit den realen Bearbeitungseinheiten 14 der realen Werkzeugmaschine 10.

Besonders vorteilhaft ist es, wenn das Maschinenmodell 240 die dreidimensionalen Geometriedaten aller bei der realen Werkzeugmaschine 10 vorhandenen Bearbeitungseinheiten 14 sowie des Maschinenbetts 12 gespeichert hat und daraus Maschinenkonfigurationsdaten 242 generiert und dem Visualisierungsprogramm 238 übermittelt werden.

Ferner ist vorzugsweise das Werkzeugmodelliersystem 250 so ausgebildet, dass es in der Lage ist, dem Visualisierungsprogramm 238 Werkzeugkonfigurationsdaten 252 zur Verfügung zu stellen, mit welchem das Visualisierungsprogramm 238 einzelnen Werkzeug plätzen der Bearbeitungseinheiten V14 die virtuellen Werkzeuge VWZ zuordnet.

Darüber hinaus ist das Visualisierungsprogramm 238 in der Lage, entsprechend den Steuerbefehlen V44 Aktionen der virtuellen Bearbeitungseinheiten V14 auf der Visualisierungseinheit 210, insbesondere dem Bildschirm 212 derselben darzustellen, und zwar durch den realen NC-Achsen X, Y, Z entsprechende Bewegungen längs virtueller NC-Achsen VX, VY, VZ.

Das Visualisierungsprogramm 238 arbeitet vorzugsweise so, dass virtuelle Steuerbefehle V44, die mit realen Steuerbefehlen 44 identisch sind, Bewegungen der virtuellen Bearbeitungseinheiten V14 entsprechend den virtuellen NC-Achsen VX, VY, VZ erzeugen, die unter Berücksichtigung eines Darstellungsmaßstabs den Bewegungen der realen Bearbeitungseinheiten 14 entsprechen.

Wahlweise, je nach dem, ob Zusatzfunktionen für eine Simulation des Bearbeitungsprogrammkomplexes 78 auf der virtuellen Maschinensteuerung V20 maßgebend sind oder nicht, ist der Aktionssteuerung V30 noch eine speicherprogrammierbare Steuerung V52 zugeordnet, welche ihrerseits einen Prozessor V54 sowie einen Speicher V56, insbesondere ausgebildet als Speicher mit schnellem Zugriff, aufweist.

Mit der speicherprogrammierenden Steuerung V52 lassen sich dabei ebenfalls in gleicher Weise wie bei der realen Werkzeugmaschine 10 Zusatzfunktionen simulieren, wie beispielsweise das Arbeiten einer virtuellen Kühlmittelzufuhr V16 oder einer virtuellen Werkstückhandhabung V18, die beide auf dem Bildschirm 212 der Visualisierungseinheit 210 ebenfalls darstellbar sind, und zwar in gleicher Weise wie die Bearbeitungseinheiten V14, nämlich durch im Maschinenmodell 240 gespeicherte Geometriedaten.

Für das Steuern der Zusatzfunktionen ist, wie in Fig. 5 dargestellt, ein Zusatzfunktionssteuerprogramm V58 vorgesehen, welches einzelne Teilfunktionsprogramme V60, beispielsweise die Teilfunktionsprogramme V60₁ und V60₂, aufweist, die ebenfalls dazu dienen, Zusatzfunktionssteuerbefehle V64₁ und V64₂ zu erzeugen, die dann dem Visualisierungsprogramm 238 übermittelt werden.

Die Aktionssteuerung V30 ist ferner durch eine als Ganzes mit V70 bezeichnete Bediensteuerung steuerbar, welche eine Datenverarbeitungseinheit V72 aufweist, die ihrerseits beispielsweise einen Prozessor V74 und einen Speicher V76 für einen oder mehrere CNC-Bearbeitungsprogrammkomplexe 78 umfasst.

Die Bearbeitungsprogrammkomplexe 78 für die virtuelle Werkzeugmaschine V10 sind dabei in identischer Weise aufgebaut und ausgebildet, wie die realen CNC-Bearbeitungsprogrammkomplexe 78 der realen Werkzeugmaschine 10, um die Möglichkeit zu haben, ein und denselben CNC-Bearbeitungsprogrammkomplex 78 einerseits auf der virtuellen Werkzeugmaschine V10 testen zu können, andererseits diesen dann unverändert auf der realen Werkzeugmaschine 10 zum Bearbeiten eines realen Werkstücks WS einsetzen zu können.

Außerdem läuft auf der Datenverarbeitungseinheit V72 ein als Ganzes mit V80 bezeichnetes und in Fig. 5 dargestelltes Bedienprogramm, welches eine Bedienoberfläche V82 aufweist, die mit einer als Ganzes mit V90 bezeichneten Maschinensteuereinheit zusammenwirkt, die beispielsweise ein übliches Tastenfeld V92 sowie Reihen V94 und V96 von Funktionstasten V98₁ bis V98ₙ umfasst, wobei vorzugsweise die Maschinensteuereinheit V90 eine virtuelle Maschinensteuereinheit ist, bei der, gesteuert durch die Bedienoberfläche V82, die Tastenfelder V92 sowie die Reihen V94 und V96 von Funktionstasten V98₁ bis V98₄ auf einem Bildschirm V99 dargestellt sind.

Bei einer Variante kann der Bildschirm V99 auch mit dem Bildschirm 212 der Visualisierungseinheit 210 identisch sein, so dass auf einem einzigen Bildschirm sowohl die Maschinensteuereinheit V90 als auch die virtuelle Bearbeitungseinheit V14 beispielsweise nebeneinander darstellbar sind.

Sowohl über das Tastenfeld V92 als auch über die Funktionstasten V98 besteht die Möglichkeit, über die Bedienoberfläche V82 einzelne Funktionsabläufe oder Modi des Bedienprogramms V80 aufzurufen und/oder zu aktivieren.

Ferner ist der Maschinensteuereinheit V90 vorzugsweise noch ein auf dem Bildschirm V99 dargestelltes Anzeigefeld V100 zugeordnet, welches die Anzeige von von dem Bedienprogramm V80 übermittelten Informationen ermöglicht. Beispielsweise ist dabei das Anzeigefeld V100 von der Bedienoberfläche V82 ansteuerbar.

Das Bedienprogramm V80 umfasst beispielsweise zumindest die auch bei der realen Werkzeugmaschine 10 vorhandene und in Fig. 5 als Ganzes mit V102 bezeichnete Programmverwaltungsfunktion mit einem Transfermodus V104, der identisch arbeitet wie bei der realen Werkzeugmaschine 10.

Ferner besteht auch die Möglichkeit, einen Start-/Stoppmodus V106 und/oder eine Programmbearbeitungsfunktion V112 und/oder eine Analysefunktion V114, eine Konfigurationsfunktion V116 und eine Werkzeugfunktion V118 vorzusehen.

Außerdem kommuniziert das Bedienprogramm V80 mit dem Kernsteuerungsprogramm V38 über ein Anpassprogramm V84.

Grundsätzlich kann das Bedienprogramm V80 sämtliche Funktionalitäten aufweisen, wie sie beispielsweise in der deutschen Patentanmeldung DE 10 2005 045 028 A1 beschrieben sind.

Auf diese deutsche Patentanmeldung wird daher vollinhaltlich Bezug genommen.

Um die Simulation der Bearbeitung eines Werkstücks WS mittels des hierzu erstellten Bearbeitungsprogrammkomplexes 78 durch virtuelle Bearbeitung eines virtuellen Werkstücks VWS auf der virtuellen Werkzeugmaschine V10 in gleicher Weise unter möglichst identischen Bedingungen wie auf der realen Werkzeugmaschine 10 durchführen zu können, ist in einer Programmumgebung V132 des Kernsteuerungsprogramms V38 das Parameterfeld V130 vorgesehen, welches zur Aufnahme der Kernsteuerungsparameter 134 geeignet ist.

Die Kernsteuerungsparameter 134 können dabei dieselben sein, wie die Kernsteuerungsparameter, die in der realen Werkzeugmaschine 10 eingesetzt werden.

Auf jeden Fall umfassen die Kernsteuerungsparameter 134 die typspezifischen Konfigurationsparameter, wie beispielsweise die allgemeinen Parameter 136, da diese für den jeweiligen Typ der Werkzeugmaschine 10 spezifisch sind.

Von den individuellen Konfigurationsparametern sind vorzugsweise alle dynamikrelevanten Konfigurationsparameter ebenfalls in dem Parameterfeld V130 vorhanden, insbesondere die achsspezifischen Parameter 142 und die CNC-Funktionsparameter 154, da diese für die Geschwindigkeit der Abarbeitung der NC-Sätze bei der Simulation einer Bearbeitung eines Werkstücks WS durch Bearbeitung eines virtuellen Werkstücks VWS mittels des Bearbeitungsprogrammkomplexes 78 wesentlich sind.

Vorzugsweise sind in dem Parameterfeld V130 der virtuellen Werkzeugmaschine V10 sämtliche Konfigurationsparameter enthalten, die auch in dem Parameterfeld 130 der realen Werkzeugmaschine 10 vorliegen.

Darüber hinaus ist dem Zusatzfunktionssteuerprogramm V58 ebenfalls ein Parameterfeld V160 zugeordnet, welches dazu geeignet ist, die mit 162 bezeichneten Zusatzfunktionsparameter aufzunehmen.

Vorzugsweise sind alle typspezifischen Zusatzfunktionsparameter 162 wie zum Beispiel Achsparameter 166 oder Interruptparameter 170 in dem Parameterfeld V160 vorhanden.

Sollen bei der Simulation des Bearbeitungsprogrammkomplexes 78 auch die Zusatzfunktionen mitberücksichtigt und somit mitsimuliert werden, ist es ebenfalls erforderlich, dass auch die individuellen Konfigurationsparameter, wie zum Beispiel Achsbenennungsparameter 168, im Parameterfeld V160 vorhanden sind, um bei der virtuellen Werkzeugmaschine V10 die Zusatzfunktionen in gleicher Weise abarbeiten zu können, wie bei der realen Werkzeugmaschine 10.

Schließlich ist auch das Bedienprogramm V80 noch mit einem Parameterfeld V180 versehen, in welchem die Bedienparameter 182 speicherbar sind, die zur Anpassung des Bedienprogramms V80 an die jeweilige virtuelle Werkzeugmaschine V10 dienen.

Um für die den Bearbeitungsprogrammkomplex 78 simulierende Bedienungsperson dieselben Bedienverhältnisse zu schaffen, ist daher vorzugsweise vorgesehen, dass von den Bedienparametern 182 zumindest die typspezifischen Konfigurationsparameter von der realen Werkzeugmaschine 10 in das Parameterfeld V180 der virtuellen Werkzeugmaschine V10 übernommen sind. Noch besser ist es, wenn auch die individuellen Konfigurationsparameter übernommen werden.

Hierzu ist eine Konfigurationsfunktion V116 des Bedienprogramms V80 mit einem Konfigurationsparameterübernahmemodus V124 ausgestattet, welcher in der Lage ist, von einer externen Datenspeichereinrichtung V200 beispielsweise vor einem erstmaligen Beginn der Simulation die der ganz speziellen realen Werkzeugmaschine 10 zugeordneten individuellen Konfigurationsparameter 142, 154, 168, 188 aus dem externen Datenträger V202 der externen Datenspeichereinrichtung V200 auszulesen und in die Parameterfelder 130, 160, 180 der virtuellen Werkzeugmaschine V10 einzuschreiben. Somit wird aus einer beispielsweise typspezifisch konfigurierten virtuellen Werkzeugmaschine V10 eine einer zumindest in wesentlichen Konfigurationsparametern einer einzelnen individuellen realen Werkzeugmaschine 10 angepasste virtuelle Werkzeugmaschine V10.

Wird als Datenträger V202 der Datenträger 202 der der realen Werkzeugmaschine 10 zugeordneten Datenspeichereinrichtung 200 in die Datenspeichereinrichtung V200 eingesetzt, so lassen sich die bei der realen Werkzeugmaschine 10 vorliegenden Konfigurationsparameter einfach auf die virtuelle Werkzeugmaschine V10 übernehmen.

Eine andere Möglichkeit ist die, dass die Datenspeichereinrichtung 200 mit dem Datenträger 202 der realen Werkzeugmaschine durch eine Datenübertragungsverbindung, beispielsweise eine Datenleitung, an die Stelle der Datenspeichereinrichtung V200 tritt und mit der Bediensteuerung V70 in Verbindung tritt.

Soll eine absolute Identität der Konfigurationsparameter sichergestellt werden, so schreibt der Konfigurationsparameterübernahmemodus V124 alle in der Speichereinrichtung V200 vorhandenen Konfigurationsparameter in die Parameterfelder 130, 160, 180.

Um bei der Simulation der Bearbeitung eines virtuellen Werkstücks VWS mittels eines Bearbeitungsprogrammkomplexes 78 alle Prozesse in exakt derselben Zeitsynchronisation ablaufen zu lassen, wie auf der realen Werkzeugmaschine 10, ist dem Kernsteuerungsprogramm V38 eine virtuelle Zeitstufe 260 zugeordnet, welche einen Interpolatortaktgeber 262 zur Erzeugung eines virtuellen Interpolatortaktes VIT umfasst, sowie eine Zeiterfassungseinheit 264 zur Umrechung von durch den virtuellen Interpolatortakt erzeugten virtuellen Taktintervallen in Realzeitintervalle und somit Umrechnung der virtuellen Zeit VT in eine reale Zeit RT.

Die reale Zeit RT wird beispielsweise über das Bedienprogramm V80 im Anzeigefeld V100 des Bedienprogramms V80 ausgegeben.

Der Interpolatortaktgeber 262 der virtuellen Zeitstufe 260 ist in der Lage, einen virtuellen Interpolatortakt VIT zu generieren, bei welchem die Taktintervalle von den Taktintervallen des realen Interpolatortaktes IT abweichen, beispielsweise wesentlich größer sind als die Intervalle des realen Interpolatortaktes IT.

Da bei der virtuellen Aktionssteuerung V30 die Abarbeitung der NC-Sätze sowie die Interpolation einzelner Zwischenwerte auf der Basis des virtuellen Interpolatortaktes VIT erfolgt, lassen sich alle zeitlichen Abläufe in der virtuellen Aktionssteuerung V30 und somit auch die Aktionen der virtuellen Bearbeitungseinheiten V14 im selben Maße zeitlich verändern, wie die Intervalle des virtuellen Interpolatortaktes VIT relativ zu den Intervallen des realen Interpolatortaktes IT verlängert oder verkürzt sind.

Wenn nun die virtuelle Werkzeugmaschine V10 mit der Maschinensteuerung V20 die Bearbeitung eines virtuellen Werkstücks VWS mittels eines Bearbeitungsprogrammkomplexes 78 simuliert, so kann die Simulation auf der Basis des virtuellen Interpolatortaktes VIT des Interpolatortaktgebers 262 beispielsweise zeitlich verlangsamt durchgeführt werden, um der Bedienungsperson die Möglichkeit zu eröffnen, mögliche Kollisionen oder Beinahekollisionen exakt zu untersuchen, wobei bei dieser Untersuchung aufgrund des virtuellen Interpolatortaktes und der individuellen Anpassung des Maschinenmodells 240 sowie der Übernahme der individuellen Konfigurationsparameter die Bearbeitungseinheiten V14 sich im Wesentlichen in jedem Moment genau so relativ zueinander bewegen wie in der Realität.

Ferner schafft die Zeiterfassungsstufe 264 noch die Möglichkeit, aus der virtuellen Zeit VT unmittelbar direkt die reale Zeit RT zu ermitteln, so dass bei der Simulation der Bearbeitung eines virtuellen Werkstücks VWS mittels eines CNC-Bearbeitungsprogrammkomplexes sich nicht nur Kollisionen von Bearbeitungseinheiten V14 ermitteln lassen, sondern auch Satzlaufzeiten für die Abarbeitung von CNC-Sätzen oder sogar Stückzeiten des jeweiligen Werkstücks VWS, die aufgrund der Umrechnung der virtuellen Zeit VT in eine reale Zeit RT den Satzlaufzeiten Stückzeiten der Bearbeitung eines realen Werkstücks WS auf einer realen Werkzeugmaschine 10 entsprechen, so dass die virtuelle Werkzeugmaschine V10 bereits bei der Simulation eines CNC-Bearbeitungsprogrammkomplexes 78 auch Aussagen über die Satzlaufzeiten oder Stückzeiten und somit auch eine Optimierung der Stückzeiten ermöglicht. Hinsichtlich der Ausbildung des Werkzeugmodelliersystems 250 wurden im Zusammenhang mit der bisherigen Erläuterung der erfindungsgemäßen Lösung keine näheren Angaben gemacht.

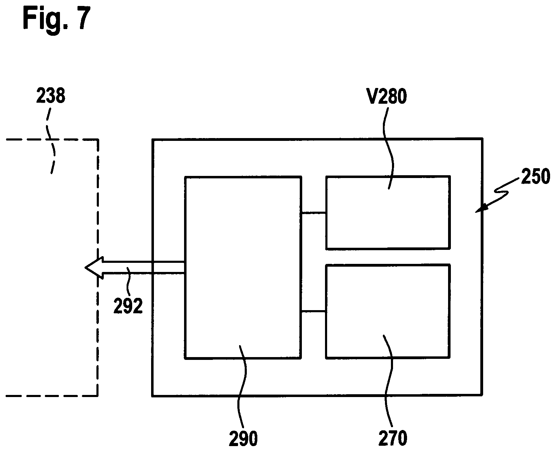

So sieht ein in Fig. 7 dargestelltes erstes vorteilhaftes Ausführungsbeispiel des Werkzeugmodelliersystems 250 vor, dass dieses ein Werkzeugmodell 270 aufweist, in welchem dreidimensionale Geometriedaten von Einzelkomponenten gespeichert sind, aus denen virtuelle Werkzeuge VWZ aufgebaut werden können.

Ferner umfasst das Werkzeugmodelliersystem 250 Werkzeugdaten V280, die Informationen über tatsächliche Abmessungen des virtuellen Werkzeugs VWZ enthalten, wobei diese tatsächlichen Abmessungen des virtuellen Werkzeugs VWZ für die Bearbeitung des virtuellen Werkstücks WS essentiell sind und von dem Kernsteuerungsprogramm V38 beim Abarbeiten der CNC-Sätze mitberücksichtigt werden sofern die Werkzeugdaten V280 zusammen mit dem CNC-Bearbeitungsprogrammkomplex 78 in dem für diese vorgesehenen Speicher V76 abgespeichert sind.

Ferner umfasst das Werkzeugmodelliersystem 250 noch einen Werkzeugkonfigurationsdatengenerator 290, welcher aus dem Werkzeugmodell 270 und den Werkzeugdaten V280 die Werkzeugkonfigurationsdaten 292 konfiguriert, welche dem Visualisierungsprogramm 238 übergeben werden, damit dieses im Zusammenhang mit der virtuellen Werkzeugmaschine V10 entsprechend den Werkzeugdaten V280 konfigurierte virtuelle Werkzeuge VWZ in die einzelnen Werkzeugpositionen der virtuellen Bearbeitungseinheiten V14 einsetzt.

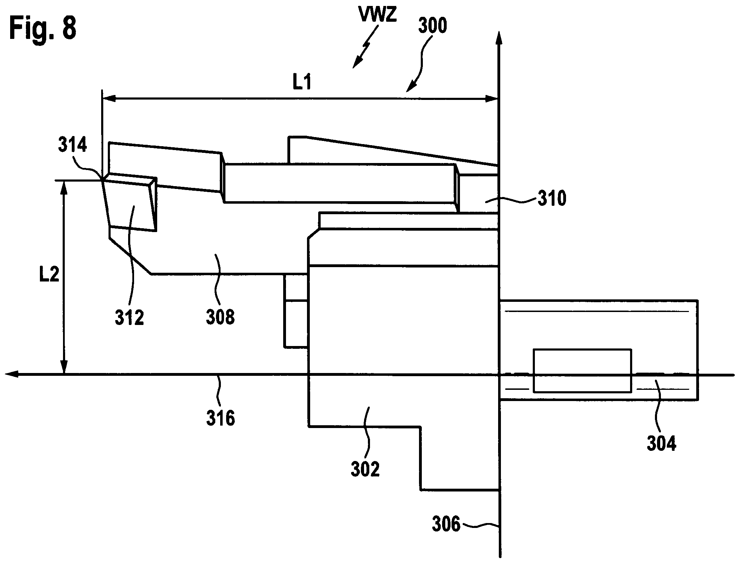

Ein derartiges virtuelles Werkzeug VWZ ist beispielhaft in Fig. 8 dargestellt, wobei es sich um ein sogenanntes dreidimensionales Geometriemodell handelt.

Ein derartiges virtuelles Werkzeug VWZ umfasst einen als Ganzes mit 300 bezeichneten und durch eine Werkzeugidentnummer identifizierbaren Werkzeughalter, welcher aus einem Werkzeughalterkörper 302 gebildet ist, der beispielsweise einen Halteschaft 304 aufweist, mit welchem der Werkzeughalterkörper 302 in einer Werkzeugaufnahme einer Bearbeitungseinheit V14 fixiert ist.

Ferner weist der Werkzeughalterkörper 302 eine Anlagefläche 306 auf, mit welcher dieser an eine Stützfläche der Bearbeitungseinheit V14, beispielsweise eines Werkzeugrevolvers oder eines anders gearteten Werkzeugträgers, anlegbar ist.

Das Halteelement 304 und der Werkzeughalterkörper 302 sind dabei fest miteinander verbunden und bilden eine zusammenhängende Einheit.

In den Werkzeughalterkörper 302 ist ein als Ganzes mit 308 bezeichneter Werkzeughalteschaft einsetzbar, wobei der Werkzeughalteschaft 308 in einer Aufnahme 310 des Werkzeughalterkörpers 302 in verschiedenen Positionen relativ zum Werkzeughalterkörper 302 montierbar ist.

Der Werkzeughalteschaft 308 trägt ein Schneidelement 312, beispielsweise eine Schneidplatte, dessen Schneidenkante 314 für die spanabhebende Bearbeitung eingesetzt wird.

Für die Positionierung und Bewegung des virtuellen Werkzeugs VWZ mit dem Werkzeughalter 300 durch das Kernsteuerungsprogramm V38 sind im Wesentlichen zwei Maße der Schneidenkante 314 entscheidend, nämlich ein Längenmaß L1, welches die Position der Schneidenkante 314 über der Anlagefläche 306 angibt, sowie ein Längenmaß L2, welches die Position der Schneidenkante 314 relativ zu einer Achse 316 angibt, die senkrecht zur Anlagefläche 306 und mittig durch das Halteelement 304 verläuft.

Durch diese zwei Längenmaße L1 und L2 sind beispielsweise bei einer Schneidenkante 314 deren Positionen im Raum definiert, sofern noch zusätzlich die Einbauposition des Werkzeughalters 302 in die entsprechende Werkzeugaufnahme der Bearbeitungseinheit V14 festgelegt ist.

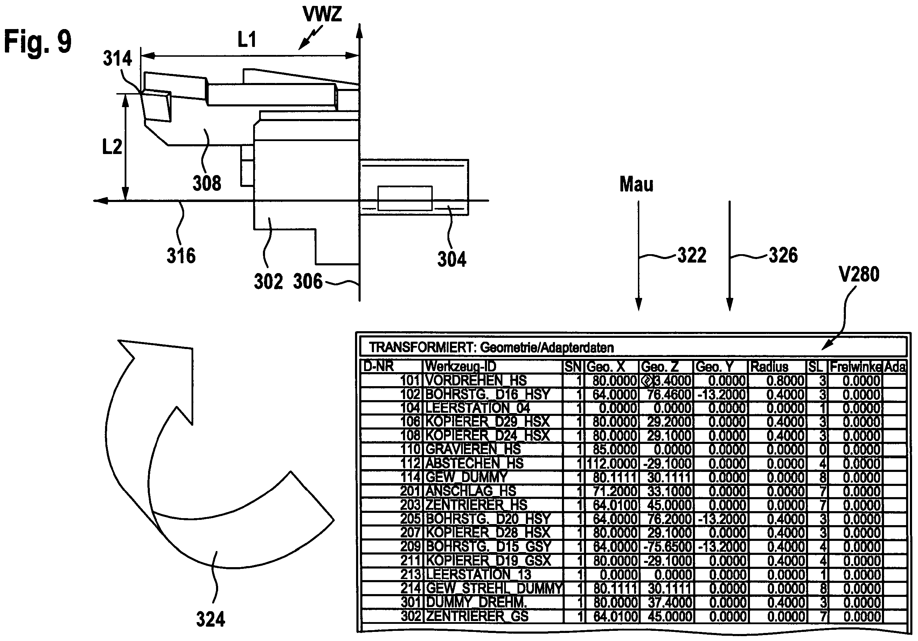

Im Fall des exemplarisch in Fig. 8 und 9 dargestellten Werkzeughalters 300 sind im Werkzeugmodell die dreidimensionalen Geometriedaten des Werkzeughalterkörpers 302 mit der Anlagefläche 306, und die des Werkzeughalteschafts 308 sowie die der Schneidplatte 312 abgelegt.

Ferner entsprechen die Längenmaße L1 und L2 den Werkzeugdaten V280 und der Werkzeugkonfigurationsdatengenerator 290 bildet aus den dreidimensionalen Geometriedaten des Werkzeughalterkörpers 302, des Werkzeughalteschafts 308, der Schneidplatte 312 und den Längenmaßen L1 und L2 die Werkzeugkonfigurationsdaten 292 des virtuellen Werkzeugs VWZ, welche dann dem Visualisierungsprogramm 238 übergeben werden.

Um ein derartiges generieren der Werkzeugkonfigurationsdaten 292 aktiv veranlassen zu können, ist die Bediensteuerung 180 mit einer Werkzeugfunktion V118 ausgestattet, welche in einem Werkzeugdateneingabemodus V322 die Möglichkeit schafft, Werkzeugdaten V280 direkt durch Dateneingabe dem Werkzeugmodelliersystem 250 vorzugeben und dann in einem Werkzeuggeneriermodus 324 mit dem Werkzeugkonfigurationsdatengenerator 290 die Werkzeugkonfigurationsdaten 292 zu generieren, um das virtuelle Werkzeug VWZ mittels des Visualisierungsprogramms 238 auf dem Bildschirm 212 der Visualisierungseinheit 210 darstellen zu können.

Neben der manuellen Eingabe im Werkzeugdateneingabemodus V322 des Bedienprogramms V80 über die Maschinensteuertafel V90 besteht aber auch die Möglichkeit, im Werkzeugdatenübernahmemodus V326 eine Übernahme der Werkzeugdaten 280 aus dem Speicher V76 zu veranlassen, in welchem die Werkzeugdaten 280 zusammen mit dem CNC-Bearbeitungsprogrammkomplex 78 gespeichert sind und von welchem die Werkzeugdaten 280 dem Kernsteuerungsprogramm V38 zur Abarbeitung mit dem CNC-Bearbeitungsprogrammkomplex 78 zur Verfügung gestellt werden.

Die im Zusammenhang mit dem Bearbeitungsprogrammkomplex 78 gespeicherten Werkzeugdaten 280 entsprechen dann, wenn die Bedienungsperson an der realen Werkzeugmaschine 10 bereits die Werkzeuge WZ aufgebaut und an einem Messplatz vermessen hat, den realen Werkzeugdaten 280 und diese Werkzeugdaten 280 werden dann im Speicher 76 dem entsprechenden CNC-Bearbeitungsprogrammkomplex 78 zugeordnet.

Der Aufbau und die Vermessung der realen Werkzeuge WZ findet in den meisten Fällen unmittelbar vor der Bearbeitung eines realen Werkstücks WS in der realen Werkzeugmaschine 10 statt. Aus diesem Grund werden auch die Werkzeugdaten 280 der realen Werkzeuge an dem Messplatz unmittelbar vor der Bearbeitung des Werkstücks WS ermittelt und mit Werkzeugdateneingabemodus 322 der Werkzeugfunktion 118 des Bedienprogramms 80 im Speicher 76 dem Bearbeitungsprogrammkomplex 78 zugeordnet gespeichert.

Wird nun unmittelbar vor der Bearbeitung des realen Werkstücks WS nochmals eine Simulation des Bearbeitungsprogrammkomplexes 78 auf der virtuellen Werkzeugmaschine V10 durchgeführt, so werden auch die realen Werkzeugdaten 280 in den Speicher V76 übernommen.

Um zu erreichen, dass bei der Simulation der Bearbeitung eines virtuellen Werkstücks VWS die realen Werkzeugdaten 280 nicht nur in gleicher Weise wie bei der realen Werkzeugmaschine 10 durch das Kernsteuerungsprogramm V38 berücksichtigt werden, sondern auch bei der Generierung der Werkzeugkonfigurationsdaten 292, ermöglicht der Werkzeugdatenübernahmemodus V326 eine Übergabe der realen Werkzeugdaten 280 aus dem Speicher V76 in das Werkzeugmodelliersystem 250, so dass in diesem die realen Werkzeugdaten 280 vorliegen und zur Generierung der Werkzeugkonfigurationsdaten 292 herangezogen werden. Das heißt, dass die Eingabe der Werkzeugdaten 280 in das Werkzeugmodelliersystem 250 im Wege der Datenübernahme der realen Werkzeugdaten 280 aus dem Speicher V76 erfolgt und unmittelbar zur Generierung der Werkzeugkonfigurationsdaten 292 eingesetzt werden kann. Alternativ dazu gibt es bei dem ersten Ausführungsbeispiel des erfindungsgemäßen Werkzeugmodelliersystems 250 noch die Möglichkeit, in einem Werkzeugdatengeneriermodus V328 der Werkzeugfunktion 118 zunächst basierend auf den dreidimensionalen Geometriedaten des Werkzeugmodells 270 die einzelnen Komponenten des Werkzeughalters 300, also beispielsweise den Werkzeughalterkörper 302, das Halteelement 304, den Werkzeughalteschaft 308 und die Schneidplatte 312 graphisch, beispielsweise auf dem Anzeigefeld V100 der Maschinensteuertafel V90 darzustellen und relativ zueinander zu positionieren, so dass allein durch manuelle Relativpositionierung des Werkzeughalterkörpers 302, des Werkzeughalteschafts 308 und der Schneidplatte 312 das virtuelle Werkzeug VWZ entsteht.

Zu diesem virtuellen Werkzeug VWZ existieren jedoch noch keine Werkzeugdaten, da diese der Bedienungsperson, die die einzelnen Komponenten grafisch relativ zueinander positioniert, nicht bekannt sind, so dass eine explizite Vermessung dieses virtuellen Werkzeugs VWZ erforderlich wäre.

Dies ist nicht notwendig bei Einsetzen des Werkzeugdatengeneriermodus 328, der aufgrund der Positionen der einzelnen Komponenten des Werkzeugs 300, also der relativen Positionen des Werkzeughalterkörpers 302, des Werkzeughalteschafts 308 und der Schneidplatte 312 die Werkzeugdaten V280 ermittelt und in dem Werkzeugmodelliersystem 250 ablegt.

Die Werkzeugdaten V280 in dem Werkzeugmodelliersystem 250 können dann auch mit dem Werkzeugdatenübernahmemodus V326 von dem Werkzeugmodelliersystem 250 dem Speicher V76 übergeben und dem CNC-Bearbeitungsprogrammkomplex 78 zugeordnet werden, so dass auch das Kernsteuerungsprogramm V38 bei der Durchführung einer Simulation mit den Werkzeugdaten V280 arbeitet, die durch das Werkzeugmodelliersystem 250 mit dem Werkzeugdatengeneriermodus 328 generiert wurden und somit erfolgt auch die Steuerung der einzelnen Aktionen unter Berücksichtigung dieser virtuellen Werkzeugdaten V280.

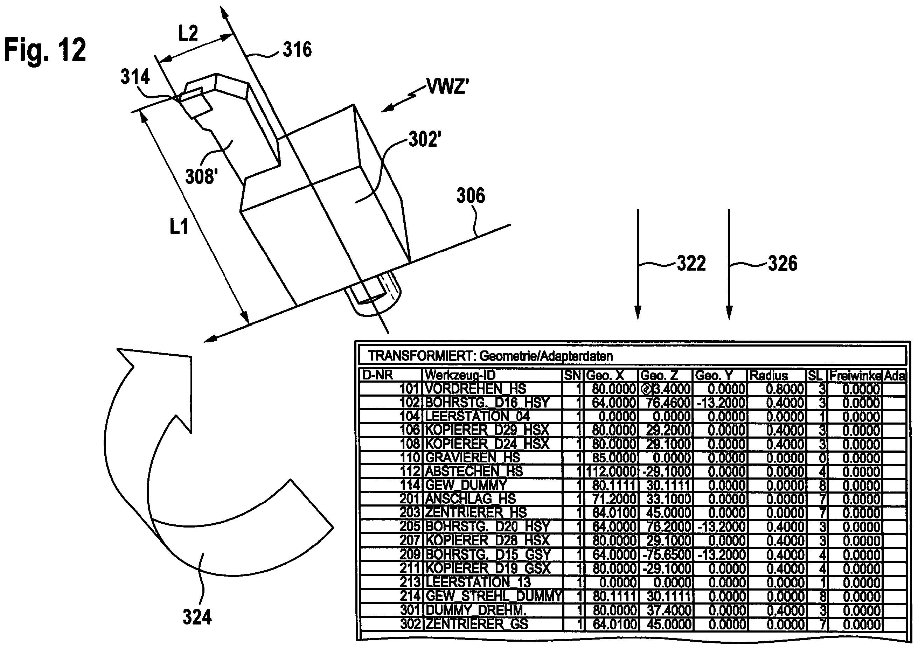

Bei einem weiteren Ausführungsbeispiel eines erfindungsgemäßen Werkzeugmodelliersystems 250', dargestellt in Fig. 12, umfasst das Werkzeugmodell 270' keine exakten Geometriedaten der einzelnen Komponenten zum Aufbau eines virtuellen Werkzeugs VWZ, sondern geometrische Volumenkörper, aus denen einzelne Volumenkörper ausgewählt und deren Abmessungen durch den Bediener eingegeben werden können.

Unter Heranziehung der Werkzeugdaten V280 generiert somit der Werkzeugkonfigurationsdatengenerator 290 keine mit dem realen Werkzeug im Wesentlichen identischen Werkzeugkonfigurationsdaten 292, sondern Werkzeugkonfigurationsdaten 292', die ein virtuelles Werkzeug VWZ' ergeben, welches in den Werkzeugdaten, insbesondere den Längen L1 und L2 exakt ist, dessen Werkzeughalterkörper 302' und dessen Werkzeughalteschaft 308' jedoch signifikant von den tatsächlichen realen Verhältnissen abweichen können.

Dennoch lassen sich mit einem derartigen Werkzeugmodelliersystem 250' zumindest näherungsweise richtige räumliche geometrische Verhältnisse auf dem Bildschirm 212 der Visualisierungseinheit 210 darstellen, die für die Überprüfung von Kollisionen geeignet sind.

Dabei können die Werkzeugdaten V280 auch bei diesem Ausführungsbeispiel auf demselben Wege eingegeben werden, wie im Zusammenhang mit dem ersten Ausführungsbeispiel dargestellt.

## Patentansprüche

1. System zur Darstellung von virtuellen Aktionen von Bearbeitungseinheiten (V14) der Werkzeugmaschine bei der Bearbeitung eines Werkstücks (VWS) entsprechend einem CNC-Bearbeitungsprogrammkomplex (78), mittels mindestens einer ersten Visualisierungseinheit (210) in Form von Aktionen virtueller Bearbeitungseinheiten (V14), umfassend eine Aktionssteuerung (V30), die Aktionen der virtuellen Bearbeitungseinheiten (V14) ermittelt, eine Visualisierungssteuerung (220), die mindestens eine zweite Datenverarbeitungseinheit (222) aufweist, welche mit einem Visualisierungsprogramm (238) anhand von geometrischen Konfigurationsdaten eines gespeicherten Maschinenmodells (240) und den von der Aktionssteuerung (V30) ermittelten Steuerbefehlen (V44) Aktionen der virtuellen Bearbeitungseinheiten (V14) auf der ersten Visualisierungseinheit (210) darstellt, ein Werkzeugmodelliersystem (250), mit welchem für mindestens ein virtuelles Werkzeug (VWZ) aus Werkzeugdaten (V280) Werkzeugkonfigurationsdaten (292) generierbar und dem Visualisierungsprogramm (238) zuführbar sind und eine Bediensteuerung (V70) mit einer dritten Datenverarbeitungseinheit, welche mit einem Bedienprogramm (V80) die Aktionssteuerung (V30) betreibt,
**dadurch gekennzeichnet, dass** die Aktionssteuerung (V30) mindestens eine erste Datenverarbeitungseinheit (V32) aufweist, auf welcher ein Kernsteuerungsprogramm (V38) läuft, welches im einfachsten Fall identisch ausgebildet ist, wie das Kernsteuerungsprogramm (38) einer realen Werkzeugmaschine (10), auf jeden Fall jedoch in der Lage ist, die CNC-Sätze von einem oder mehreren Teileprogrammen (40) in derselben Art und Weise wie ein Kernsteuerungsprogramm (38) der realen Werkzeugmaschine (10) abzuarbeiten, wobei das Abarbeiten der Teileprogramme (40) in gleicher Weise wie beim Kernsteuerungsprogramm (38) in einzelnen Kanälen (V42) des Kernsteuerungsprogramms (V38) erfolgt, so dass eine parallele Abarbeitung der einzelnen Teileprogramme (40) möglich ist, die entweder unabhängig voneinander oder synchronisiert durch Synchronisierbefehle erfolgt, wobei die Aktionssteuerung (V30) mit dem CNC-Sätze des CNC-Bearbeitungsprogrammkomplexes verarbeitenden Kernsteuerungsprogramm (V38) Steuerbefehle (V44) für Aktionen der virtuellen Bearbeitungseinheiten (V14) ermittelt, dass das Werkzeugmodelliersystem (250) mit einem Werkzeugkonfigurationsdatengenerator (290) aus in einem Werkzeugmodell (270) gespeicherten Geometriedaten von Einzelkomponenten (302, 308, 312) der virtuellen Werkzeuge (VWZ) und Werkzeugdaten (280), die Werkzeugkonfigurationsdaten (292) generiert, wobei die Werkzeugdaten (280) Informationen über tatsächliche Abmessungen des virtuellen Werkzeugs (VWZ) enthalten, welche für die Bearbeitung des virtuellen Werkstücks (VWS) essentiell sind und von dem Kernsteuerungsprogramm (V38) beim Abarbeiten der CNC-Sätze mitberücksichtigt werden, und dass die vom Werkzeugmodelliersystem (250) benötigten Werkzeugdaten (V280) eine Struktur aufweisen, die einer Struktur von Werkzeugdaten (280) des CNC-Bearbeitungsprogrammkomplexes (78) entspricht, mit denen das Steuerungsprogramm (38) der Aktionssteuerung (30) einer realen Werkzeugmaschine (10) arbeitet.

2. System nach einem der voranstehenden Ansprüche, **dadurch gekennzeichnet, dass** das Bedienprogramm (V80) eine Werkzeugfunktion (V118) mit einem Werkzeugdatenübernahmemodus (V326) aufweist, mit welchem dem CNC-Bearbeitungsprogrammkomplex (78) zugeordnete Werkzeugdaten (280) dem Werkzeugmodelliersystem (250) zur Generierung der Werkzeugkonfigurationsdaten (292) übergebbar sind.

3. System nach Anspruch 1 oder 2, **dadurch gekennzeichnet, dass** der Werkzeugdatenübernahmemodus (V326) die in der Bediensteuerung (V80) zusammen mit dem CNC-Bearbeitungsprogrammkomplex (78) gespeicherten Werkzeugdaten (280) ausliest und dem Werkzeugmodelliersystem (250) übergibt.

4. System nach Anspruch 2 oder 3, **dadurch gekennzeichnet, dass** das mit dem Werkzeugdatenübernahmemodus (V326) Werkzeugdaten (V280) aus dem Werkzeugmodelliersystem (250) dem CNC-Bearbeitungsprogrammkomplex (78) übergebbar sind.

5. System nach einem der voranstehenden Ansprüche, **dadurch gekennzeichnet, dass** die Geometriedaten der Einzelkomponenten (302, 308, 312) der Werkzeuge (VWZ) dreidimensionale Geometriedaten sind.

6. Verfahren zur Darstellung von Aktionen von Bearbeitungseinheiten einer realen Werkzeugmaschine, bei der Bearbeitung eines Werkstücks entsprechend einem CNC-Bearbeitungsprogrammkomplex mittels mindestens einer ersten Visualisierungseinheit in Form von Aktionen virtueller Bearbeitungseinheiten einer virtuellen Werkzeugmaschine, bei welchem eine Aktionssteuerung Aktionen der virtuellen Bearbeitungseinheiten ermittelt, bei welchem eine Bediensteuerung mit einem Bedienprogramm die Aktionssteuerung betreibt und bei welchem eine Visualisierungssteuerung mit einem Visualisierungsprogramm anhand von Konfigurationsdaten eines gespeicherten Maschinenmodells und den von der Aktionssteuerung ermittelten Steuerbefehlen Aktionen der virtuellen Bearbeitungseinheit auf der ersten Visualisierungseinheit darstellt, und bei welchem ein Werkzeugmodelliersystem für mindestens ein virtuelles Werkzeug Werkzeugkonfigurationsdaten für das Visualisierungsprogramm aus Werkzeugdaten generiert und dem Visualisierungsprogramm zuführt, **dadurch gekennzeichnet, dass** die Aktionssteuerung (V30) mindestens eine erste Datenverarbeitungseinheit (V32) aufweist, auf welcher ein Kernsteuerungsprogramm (V38) läuft, welches im einfachsten Fall identisch ausgebildet ist, wie das Kernsteuerungsprogramm (38) der realen Werkzeugmaschine (10), auf jeden Fall jedoch in der Lage ist, die CNC-Sätze von einem oder mehreren Teileprogrammen (40) in derselben Art und Weise wie ein Kernsteuerungsprogramm (38) der realen Werkzeugmaschine (10) abzuarbeiten, wobei das Abarbeiten der Teileprogramme (40) in gleicher Weise wie beim Kernsteuerungsprogramm (38) in einzelnen Kanälen (V42) des Kernsteuerungsprogramms (V38) erfolgt, so dass eine parallele Abarbeitung der einzelnen Teileprogramme (40) möglich ist, die entweder unabhängig voneinander oder synchronisiert durch Synchronisierbefehle erfolgt, wobei die Aktionssteuerung (V30) mit dem CNC-Sätze des CNC-Bearbeitungsprogrammkomplexes verarbeitenden Kernsteuerungsprogramm (V38) Steuerbefehle (V44) für Aktionen der virtuellen Bearbeitungseinheiten (V14) ermittelt, dass von dem Werkzeugmodelliersystem (250) mit einem Werkzeugkonfigurationsdatengenerator (290) aus in einem Werkzeugmodell (270) gespeicherten Geometriedaten von Einzelkomponenten (302, 308, 312) der virtuellen Werkzeuge (VWZ) und den Werkzeugdaten (280), die Werkzeugkonfigurationsdaten (292) generiert werden, wobei die Werkzeugdaten (280) Informationen über tatsächliche Abmessungen des virtuellen Werkzeugs (VWZ) enthalten, welche für die Bearbeitung des virtuellen Werkstücks (VWS) essentiell sind und von dem Kernsteuerungsprogramm (V38) beim Abarbeiten der CNC-Sätze mitberücksichtigt werden und dass die vom Werkzeugmodelliersystem verarbeiteten Werkzeugdaten eine Struktur aufweisen, die einer Struktur der Werkzeugdaten des CNC-Bearbeitungsprogrammkomplexes für eine reale Werkzeugmaschine entsprechen.

7. Verfahren nach Anspruch 6, **dadurch gekennzeichnet, dass** die virtuellen Werkzeugdaten den bei einer realen Werkzeugbestückung der realen Werkzeugmaschine ermittelten Werkzeugdaten für mindestens ein Werkzeug entsprechen.

8. Verfahren nach einem der Ansprüche 6 bis 7, **dadurch gekennzeichnet, dass** die Werkzeugdaten der realen Werkzeugbestückung bei einer realen Werkzeugvoreinstellung ermittelt werden.

9. Verfahren nach einem der Ansprüche 6 bis 8, **dadurch gekennzeichnet, dass** die Werkzeugdaten entsprechend ihrem einem Verschleiß der Werkzeuge korrigiert werden.

## Claims

1. System for representing virtual operations of machining units (V14) of the machine tool during the machining of a workpiece (VWS) in accordance with a CNC machining programme complex (78), by means of at least one first visualization unit (210) in the form of operations of virtual machining units (V14), comprising an operation control (V30) determining operations of the virtual machining units (V14), a visualization control (220) having at least one second data processing unit (222) representing operations of the virtual machining units (V14) on the first visualization unit (210) with a visualization programme (238) on the basis of geometric configuration data of a stored machine model (240) and the control commands (V44) determined by the operation control (V30), a tool modelling system (250) for generating tool configuration data (292) for at least one virtual tool (VWZ) from tool data (V280) and supplying said data to the visualization programme (238) and an operating control (V70) with a third data processing unit operating the operation control (V30) with an operating programme (V80),
**characterized in that** the operation control (V30) has at least a first data processing unit (V32), a core control programme (V38) running on said unit and being, in the simplest case, of an identical design to the core control programme (38) of a real machine tool (10) but being, in any case, in a position to process the CNC blocks of one or more part programmes (40) in the same manner as a core control programme (38) of the real machine tool (10), wherein the part programmes (40) are processed in the same way as with the core control programme (40) in individual channels (V42) of the core control programme (V38) such that a parallel processing of the individual part programmes (40) is possible and this takes place either independently of one another or synchronized by synchronizing commands, wherein the operation control (V30) determines control commands (V44) for operations of the virtual machining units (V14) with the core control programme (V38) processing CNC blocks of the CNC machining programme complex, that the tool modelling system (250) generates the tool configuration data (292) with a tool configuration data generator (290) from geometry data of individual components (302, 308, 312) of the virtual tools (VWZ) and tool data (280) stored in a tool model (270), wherein the tool data (280) contain information on actual dimensions of the virtual tool (VWZ) essential for the machining of the virtual workpiece (VWS) and taken into consideration by the core control programme (V38) during processing of the CNC blocks, and that the tool data (V280) required by the tool modelling system (250) have a structure corresponding to a structure of tool data (280) of the CNC machining programme complex (78), the control programme (38) of the operation control (30) of a real machine tool (10) operating with said tool data.

2. System as defined in one of the preceding claims, **characterized in that** the operating programme (V80) has a tool function (V118) with a tool data take-over mode (V326), tool data (280) associated with the CNC machining programme complex (78) being transferable to the tool modelling system (250) for generating the tool configuration data (292) with said take-over mode.

3. System as defined in claim 1 or 2, **characterized in that** the tool data take-over mode (V326) reads the tool data (280) stored in the operating control (V80) together with the CNC machining programme complex (78) and transfers them to the tool modelling system (250).

4. System as defined in claim 2 or 3, **characterized in that** tool data (V280) from the tool modelling system (250) are transferable to the CNC machining programme complex (78) with the tool data take-over mode (V326).

5. System as defined in any one of the preceding claims, **characterized in that** the geometry data of the individual components (302, 308, 312) of the tools (VWZ) are three-dimensional geometry data.

6. Method for representing operations of machining units of a real machine tool during the machining of a workpiece in accordance with a CNC machining programme complex by means of at least one first visualization unit in the form of operations of virtual machining units of a virtual machine tool, wherein an operation control determines operations of the virtual machining units, wherein an operating control operates the operation control with an operating programme and wherein a visualization control represents operations of the virtual machining unit on the first visualization unit with a visualization programme on the basis of configuration data of a stored machine model and the control commands determined by the operation control, and wherein for at least one virtual tool a tool modelling system generates tool configuration data for the visualization programme from tool data and supplies said data to the visualization programme, **characterized in that** the operation control (V30) has at least a first data processing unit (V32), a core control programme (V38) running on said unit and being, in the simplest case, of an identical design to the core control programme (38) of the real machine tool (10) but being, in any case, in a position to process the CNC blocks of one or more part programmes (40) in the same manner as a core control programme (38) of the real machine tool (10), wherein the part programmes (40) are processed in the same way as with the core control programme (38) in individual channels (V42) of the core control programme (V38) such that a parallel processing of the individual part programmes (40) is possible and takes place either independently of one another or synchronized by synchronizing commands, wherein the operation control (V30) determines control commands (V44) for operations of the virtual machining units (V14) with the core control programme (V38) processing CNC blocks of the CNC machining programme complex, that the tool configuration data (292) are generated by the tool modelling system (250) with a tool configuration data generator (290) from geometry data of individual components (302, 308, 312) of the virtual tools (VWZ) and the tool data (280) stored in a tool model (270), wherein the tool data (280) contain information on actual dimensions of the virtual tool (VWZ) essential for the machining of the virtual workpiece (VWS) and taken into consideration by the core control programme (V38) during processing of the CNC blocks, and that the tool data processed by the tool modelling system have a structure corresponding to a structure of the tool data of the CNC machining programme complex for a real machine tool.

7. Method as defined in claim 6, **characterized in that** the virtual tool data correspond to the tool data for at least one tool determined during real tooling of the real machine tool.

8. Method as defined in one of claims 6 to 7, **characterized in that** the tool data of the real tooling are determined during a real preliminary tool adjustment.

9. Method as defined in any one of claims 6 to 8, **characterized in that** the tool data are corrected in accordance with wear and tear of the tools.

## Revendications

1. Système de représentation d'actions virtuelles d'unités d'usinage (V14) de la machine-outil lors de l'usinage d'une pièce (VWS) en fonction d'un ensemble de programmes d'usinage CNC (78), au moyen d'au moins une première unité de visualisation (210) sous forme d'actions d'unités d'usinage (V14) virtuelles, comprenant une commande d'action (V30), qui détermine les actions des unités d'usinage (V14) virtuelles, une commande de visualisation (220), qui comprend au moins une deuxième unité de traitement de données (222), laquelle représente les actions des unités d'usinage (V14) virtuelles sur la première unité de visualisation (210) au moyen d'un programme de visualisation (238) et sur la base des données de configuration géométrique d'un modèle de machine (240) mis en mémoire et des instructions de commande (V44) déterminées par la commande d'action (V30), un système de modélisation d'outil (250), au moyen duquel des données de configuration d'outil (292) peuvent être générées pour au moins un outil (VWZ) virtuel à partir de données d'outil (V280) et peuvent être amenées au programme de visualisation (238), et une commande d'opération (V70) pourvue d'une troisième unité de traitement de données, laquelle fait fonctionner la commande d'action (V30) au moyen d'un programme d'opération (V80),
**caractérisé en ce que** la commande d'action (V30) comprend au moins une première unité de traitement de données (V32), sur laquelle s'exécute un programme de commande centrale (V38), lequel, dans le cas le plus simple, est identique au programme de commande centrale (38) d'une machine-outil (10) réelle, mais est dans chaque cas en mesure d'exécuter les séquences CNC d'un ou de plusieurs programmes pièce (40) de la même façon qu'un programme de commande centrale (38) de la machine-outil (10) réelle, dans lequel l'exécution des programmes pièce (40) est réalisée de la même façon que pour le programme de commande centrale (38) dans différents canaux (V42) du programme de commande centrale (V38), de sorte qu'une exécution parallèle des différents programmes pièce (40) est possible, laquelle est réalisée soit indépendamment les uns des autres soit de façon synchronisée au moyen d'instructions de synchronisation, dans lequel la commande d'action (V30) déterminant avec le programme de commande centrale (V38) exécute les séquences CNC de l'ensemble de programmes d'usinage CNC les instructions de commande (V44) pour les actions des unités d'usinage (V14) virtuelles, **en ce que** le système de modélisation d'outil (250) génère les données de configuration d'outil (292) au moyen d'un générateur de données de configuration d'outil (290), à partir de données géométriques, mises en mémoire dans un modèle d'outil (270), de composants individuels (302, 308, 312) des outils (VWZ) virtuels et des données d'outil (280), dans lequel les données d'outil (280) contiennent des informations concernant les dimensions effectives de l'outil (VWZ) virtuel, lesquelles sont essentielles à l'usinage de la pièce (VWS) virtuelle et sont prises en compte par le programme de commande centrale (V38) lors de l'exécution des séquences CNC, et **en ce que** les données d'outil (V280) nécessaires au système de modélisation d'outil (250) présentent une structure qui correspond à une structure des données d'outil (280) de l'ensemble de programmes d'usinage CNC (78), au moyen desquelles le programme de commande (38) de la commande d'action (30) d'une machine-outil (10) réelle est exécuté.

2. Système selon l'une quelconque des revendications précédentes, **caractérisé en ce que** le programme d'opération (V80) comprend une fonction outil (V118) présentant un mode de réception de données d'outil (V326), au moyen duquel les données d'outil (280) associées à l'ensemble de programmes d'usinage CNC (78) peuvent être transmises au système de modélisation d'outil (250) pour la génération des données de configuration d'outil (292).

3. Système selon la revendication 1 ou 2, **caractérisé en ce que** le mode de réception de données d'outil (V326) consulte les données d'outil (280) mises en mémoire dans la commande d'opération (V80) conjointement avec l'ensemble de programmes d'usinage CNC (78) et les transmet au système de modélisation d'outil (250).

4. Système selon la revendication 2 ou 3, **caractérisé en ce que** les données d'outil (V280) peuvent être transmises du système de modélisation d'outil (250) à l'ensemble de programmes d'usinage CNC (78) au moyen du mode de réception de données d'outil (V326).

5. Système selon l'une quelconque des revendications précédentes, **caractérisé en ce que** les données géométriques des composants individuels (302, 308, 312) des outils (VWZ) sont des données géométriques tridimensionnelles.

6. Procédé de représentation d'actions d'unités d'usinage d'une machine-outil réelle, lors de l'usinage d'une pièce en fonction d'un ensemble de programmes d'usinage CNC, au moyen d'au moins une première unité de visualisation sous forme d'actions d'unités d'usinage virtuelles d'une machine-outil virtuelle, selon lequel une commande d'action détermine les actions des unités d'usinage virtuelles, selon lequel une commande d'opération fait fonctionner la commande d'action au moyen d'un programme d'opération, et selon lequel une commande de visualisation représente les actions de l'unité d'usinage virtuelle sur la première unité de visualisation au moyen d'un programme de visualisation et sur la base des données de configuration d'un modèle de machine mis en mémoire et des instructions de commande déterminées par la commande d'action, et selon lequel un système de modélisation d'outil génère des données de configuration d'outil pour le programme de visualisation pour au moins un outil virtuel à partir des données d'outil et les amène au programme de visualisation, **caractérisé en ce que** la commande d'action (V30) comprend au moins une première unité de traitement de données (V32), sur laquelle s'exécute un programme de commande centrale (V38), lequel, dans le cas le plus simple, est identique au programme de commande centrale (38) de la machine-outil (10) réelle, mais est dans chaque cas en mesure d'exécuter les séquences CNC d'un ou de plusieurs programmes pièce (40) de la même façon qu'un programme de commande centrale (38) de la machine-outil (10) réelle, dans lequel l'exécution des programmes pièce (40) est réalisée de la même façon que pour le programme de commande centrale (38) dans différents canaux (V42) du programme de commande centrale (V38), de sorte qu'une exécution parallèle des différents programmes pièce (40) est possible, qui est réalisée soit indépendamment les uns des autres soit de façon synchronisée au moyen d'instructions de synchronisation, dans lequel la commande d'action (V30) détermine avec le programme de commande centrale (V38) exécutant les séquences CNC de l'ensemble de programmes d'usinage CNC les instructions de commande (V44) pour les actions des unités d'usinage (V14) virtuelles, **en ce que** les données de configuration d'outil (292) sont générées par le système de modélisation d'outil (250) au moyen d'un générateur de données de configuration d'outil (290), à partir de données géométriques, mises en mémoire dans un modèle d'outil (270), de composants individuels (302, 308, 312) des outils (VWZ) virtuels et des données d'outils (280), dans lequel les données d'outil (280) contiennent des informations concernant les dimensions effectives de l'outil (VWZ) virtuel, lesquelles sont essentielles à l'usinage de la pièce (VWS) virtuelle et sont prises en compte par le programme de commande centrale (V38) lors de l'exécution des séquences CNC, et **en ce que** les données d'outil traitées par le système de modélisation d'outil présentent une structure qui correspond à une structure des données d'outil de l'ensemble de programmes d'usinage CNC pour une machine-outil réelle.

7. Procédé selon la revendication 6, **caractérisé en ce que** les données d'outil virtuel correspondent pour au moins un outil aux données d'outil déterminées dans le cas d'un outillage réel de la machine-outil réelle.

8. Procédé selon l'une quelconque des revendications 6 à 7, **caractérisé en ce que** les données d'outil de l'outillage réel sont déterminées lors d'un préréglage d'outil réel.

9. Procédé selon l'une quelconque des revendications 6 à 8, **caractérisé en ce que** les données d'outil sont corrigées en fonction d'une usure des outils.
